(19) **Europäisches Patentamt / European Patent Office / Office européen des brevets**

(11) **EP 3 075 991 B1**

(12) **EUROPEAN PATENT SPECIFICATION**

(45) Date of publication and mention
of the grant of the patent:
**21.08.2019 Bulletin 2019/34**

(51) Int Cl.:
**F02D 41/00** *(2006.01)*          *F02D 41/14* *(2006.01)*
**F02D 41/18** *(2006.01)*

(21) Application number: **16162962.1**

(22) Date of filing: **30.03.2016**

(54) **CONTROL DEVICE FOR INTERNAL COMBUSTION ENGINE**

STEUERUNGSVORRICHTUNG FÜR VERBRENNUNGSMOTOR

DISPOSITIF DE CONTRÔLE POUR MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2015 JP 2015072948**
**09.02.2016 JP 2016022709**

(43) Date of publication of application:
**05.10.2016 Bulletin 2016/40**

(73) Proprietor: **Toyota Jidosha Kabushiki Kaisha
Toyota-shi, Aichi-ken 471-8571 (JP)**

(72) Inventors:
• **IBUKI, Taku
Aichi-ken, 471-8571 (JP)**
• **NAKAMURA, Sho
Aichi-ken, 471-8571 (JP)**
• **AOYAGI, Shinsuke
Aichi-ken, 471-8571 (JP)**

(74) Representative: **J A Kemp
14 South Square
Gray's Inn
London WC1R 5JJ (GB)**

(56) References cited:
EP-A1- 2 128 407          GB-A- 2 463 018
US-A1- 2003 188 727       US-A1- 2005 193 978
US-A1- 2008 167 790       US-A1- 2012 037 134
US-A1- 2012 130 623

Printed by Jouve, 75001 PARIS (FR)

**Description**

BACKGROUND OF THE INVENTION

1. Field of the Invention

The invention relates to a control device for an internal combustion engine.

2. Description of Related Art

US 2008/0167790 A describes an EGR control device including an EGR control means which, when a large-amount EGR is requested, continuously controls an EGR valve toward a fully open condition, and then continuously controls an intake throttle valve toward a fully closed condition, and in a dead region where a change in the opening of the intake throttle valve only causes a small change in EGR quantity, the control means restricts a feedback control of the EGR quantity using the intake throttle valve and performs a feedback control of the EGR quantity using the EGR valve to compensate for the restriction of the feedback control using the intake throttle valve. US 2012/0037134 A describes methods and systems for adjusting an EGR valve and one or more intake throttles responsive to the output of an intake oxygen sensor to provide a desired amount of EGR flow while maintaining engine torque. The adjustments are coordinated to improve distributed control of the EGR valves and intake throttles, and enable EGR flow even when one actuator is limited. US 2005/0193978 A describes a diesel engine comprising an EGR valve, an intake throttle valve, a control unit for controlling those EGR valve and intake throttle valve, and a detection unit for detecting the intake air quantity upstream of an EGR gas inlet portion, the diesel engine implementing a premix combustion at least in the prescribed operation region. The control unit, at least in the operation region in which the premix combustion is implemented, determines a target intake air quantity necessary for igniting the gas mixture at the target timing based on the engine operation state and controls the intake throttle valve and/or EGR valve so that the actual intake air quantity detected by the detection unit matches the target intake air quantity. As a result, the ignition timing of the fuel in premix combustion can be easily and optimally controlled. EP 2 128 407 aims for quantity of EGR gas recirculated by a low-pressure EGR device to be more accurately controlled. An EGR controller for internal combustion engine has an exhaust purification means provided in the exhaust passage of the engine, a low-pressure EGR passage for recirculating exhaust gas from the exhaust passage in the downstream of the exhaust gas purification means to the intake passage of the engine, a low-pressure EGR control valve provided in the low-pressure EGR passage and controlling the quantity of exhaust gas to be recirculated, a restriction valve provided in the exhaust passage connected to the low-pressure EGR passage or the intake passage connected to the low-pressure EGR passage, pressure detection means for detecting the pressure between the restriction valve and the low-pressure EGR control valve, and control means for controlling, based on the detected pressure, the restriction valve to form a pressure difference within a predetermined range between the upstream and downstream portions of the low-pressure EGR control valve. US 2003/0188727 A describes a method and system for controlling EGR rate of an internal combustion engine. The engine has an intake throttle for controlling mass flow to an intake of the engine and an EGR valve for controlling flow from the exhaust of the engine back to the intake of the engine along with air passing through the intake throttle. The method includes measuring a mass air flow passing to the intake throttle and a desired mass air flow. An error signal is produced representative of a difference between the measure mass air flow and the desired mass air flow. A pair of control signals is produced in response to such produced error signal. One of the pair of control signals is used to adjust the intake throttle to control mass air flow through such intake throttle. The other one of the pair of control signals is used to adjust EGR flow through the EGR valve. The pair of control signals operate the intake throttle and the EGR valve to drive the error signal towards a null. In one embodiment, the one of the control signals used to adjust the EGR valve is used to provide such adjustment only when the intake throttle is in a position to provide substantially maximum mass air flow through such intake throttle to the intake of the engine. In one embodiment the pair of control signals operate to drive the throttle to a closed position only when such error signal is unable to be driven towards the null solely from adjustment by the EGR valve. In one embodiment, the engine includes a turbocharger having a compressor and a turbine coupled to the compressor. A portion of engine exhaust is directed to the EGR valve and another portion of the engine exhaust is directed to the turbine. The one of the control signals adjusting the EGR valve adjusts such portions. The portion of the engine exhaust to the turbine contributes to the mass air flow via the compressor. The mass air flow from the compressor passes to the intake throttle and wherein the intake throttle adjustment adjusts the mass air flow. In the related art, a technique relating to an EGR amount control for a diesel engine that is provided with an EGR device is disclosed in, for example, Japanese Patent Application Publication No. 2003-166445 (JP 2003-166445 A). According to this technique, a target opening degree of an intake throttle valve continues to be calculated even in the middle of a feedback control by an EGR valve in a case where both the EGR valve and the intake throttle valve are subjected to feedback controls, and the actual opening degree of the intake throttle valve, meanwhile, is fixed to full opening. Then, at a time of a switching from a control by the EGR valve to a control by the intake throttle valve, the intake throttle valve initiates an operation from an already-calculated optimal target opening degree, and a torque shock that is attributable to the switching is prevented.

In addition, according to the technique that is disclosed in JP 2003-166445 A described above, the EGR valve is maintained at the full opening and a gradual closing of the intake throttle valve is performed as a suctioned air amount decreases in a case where an EGR amount is insufficient despite the full opening of the EGR valve. Then, a differential pressure across the EGR valve can be increased, and thus a large EGR amount is obtained.

In order for a deterioration of emission to be suppressed, an air amount of an internal combustion engine needs to be accurately controlled at a target value by a control valve such as the EGR valve and a diesel throttle valve being operated. One of important elements with respect to this requirement is to ensure a control responsiveness and a converging performance of the control valve. A parameter that affects the control responsiveness and the converging performance of the control valve is a differential gas pressure across the control valve, and the control responsiveness of the valve is ensured insofar as the differential pressure is ensured to be at least a value that is determined by valve properties.

The above-described technique, however, takes nothing into account with regard to the differential pressures across the EGR valve and the intake throttle valve. The "differential pressure across a valve" according to this specification refers to a differential pressure between a front pressure and the rear pressure with the gas pressure on the upstream side of the target valve being the front pressure and the gas pressure on the downstream side of the target valve being the rear pressure. Accordingly, in a control state where the EGR valve is fully opened, for example, the differential pressure across the EGR valve is insufficient and the control responsiveness cannot be ensured in some cases. In addition, according to the technique of the related art described above, the intake throttle valve is in a state of being fully open at a time of the switching from the control of the EGR valve to the control of the intake throttle valve. Accordingly, immediately after the control of the intake throttle valve is initiated, the control responsiveness of the intake throttle valve cannot be ensured and a quick convergence toward the target value might be impossible. As described above, according to the technique of the related art described above, the control responsiveness is not always ensured before and after the switching in the case of the switching between the control of the EGR valve and the control of the intake throttle valve.

If the control responsiveness of the control valve is the only matter of concern, a high differential pressure across the control valve may be maintained at all times. In this case, however, a deterioration of fuel efficiency that is attributable to an increase in flow path resistance poses a problem. As described above, there is a trade-off relationship between the control responsiveness of the control valve and the fuel efficiency, and the development of a technique achieving both at the same time has been desired.

SUMMARY OF THE INVENTION

The invention has been made in view of the above-described problems, and an object thereof is to provide a control device for an internal combustion engine with which a control responsiveness can be ensured before and after a control switching and a deterioration of fuel efficiency can be suppressed in an internal combustion engine that is capable of the switching between a fresh air amount control using a diesel throttle valve and a fresh air amount control using an EGR valve.

In order to achieve the object described above, a first aspect of the invention provides a control device for an internal combustion engine as defined in appended claim 1.

A second aspect of the invention provides a control device for an internal combustion engine as defined in appended claim 2.

A third aspect according to the first or second aspects further includes EGR valve target differential pressure calculation means for calculating the EGR valve target differential pressure in accordance with the closing degree of the throttle valve.

The invention is configured to allow the switching between the throttle valve fresh air amount control for determining the closing degree of the throttle valve by the feedback control and the EGR valve fresh air amount control for determining the opening degree of the EGR valve by the feedback control during the fresh air amount control in which the fresh air amount or the state quantity correlated with the fresh air amount is allowed to approach the target value. According to the invention, the second differential pressure that is the differential pressure across the EGR valve is controlled to correspond to the EGR valve target differential pressure during the execution of the throttle valve fresh air amount control and the first differential pressure that is the differential pressure across the throttle valve is controlled to correspond to the throttle valve target differential pressure during the execution of the EGR valve fresh air amount control. In addition, according to the first invention, the switching from the throttle valve fresh air amount control to the EGR valve fresh air amount control is performed in a case where the differential pressure across the throttle valve falls below the throttle valve target differential pressure during the execution of the throttle valve fresh air amount control and the switching from the EGR valve fresh air amount control to the throttle valve fresh air amount control is performed in a case where the differential pressure across the EGR valve falls below the EGR valve target differential pressure during the execution of the EGR valve fresh air amount control. The differential pressure across the valve that is used for the fresh air amount control is an index regarding whether or not a control responsiveness and a converging performance can be ensured. In addition, the differential pressure across the valve that is not used for the fresh air amount control is a fuel efficiency index. According to the invention, these differential pressures across the valves are controlled to correspond to the respective target differential pressures at a time of the fresh air amount control switching, and thus a control for suppressing a deterioration of fuel efficiency can be performed while the control responsiveness and the converging performance are ensured before and after the switching.

According to the invention, the closing degree for the throttle valve differential pressure control for the differential pressure across the throttle valve to correspond to the throttle valve target differential pressure is calculated. Then, the switching from the throttle valve fresh air amount control to the EGR valve fresh air amount control is performed in a case where the closing degree of the throttle valve falls below the closing degree for the throttle valve differential pressure control during the execution of the throttle valve fresh air amount control. Hence, according to the invention, a timing at which the differential pressure across the throttle valve reaches the throttle valve target differential pressure can be accurately determined based on the closing degree of the throttle valve, and thus the switching from the throttle valve fresh air amount control to the EGR valve fresh air amount control can be performed at an optimal timing.

According to the invention, the closing degree for the throttle valve differential pressure control for the differential pressure across the throttle valve to reach the throttle valve target differential pressure is calculated based on the actual fresh air amount and the gas state quantities across the throttle valve. In a case where a correction for corresponding to the environmental condition is performed during the fresh air amount control for the internal combustion engine, an effect of the correction is reflected in the actual fresh air amount. Hence, according to the invention, the closing degree for the throttle valve differential pressure control corresponding to the environmental condition can be calculated based on the operation condition including the actual fresh air amount.

According to the invention, the differential pressure across the throttle valve during the execution of the EGR valve fresh air amount control is controlled at the throttle valve target differential pressure by the feedback control. Hence, according to the invention, the differential pressure across the throttle valve at a time when the switching to the throttle valve fresh air amount control is performed can be allowed to approach the throttle valve target differential pressure in an accurate manner.

According to the invention, the opening degree for the EGR valve differential pressure control for the differential pressure across the EGR valve to reach the EGR valve target differential pressure is calculated. Then, the switching from the EGR valve fresh air amount control to the throttle valve fresh air amount control is performed in a case where the opening degree of the EGR valve exceeds the opening degree for the EGR valve differential pressure control during the execution of the EGR valve fresh air amount control. Hence, according to the invention, a timing at which the differential pressure across the EGR valve reaches the EGR valve target differential pressure can be accurately determined based on the opening degree of the EGR valve, and thus the switching from the EGR valve fresh air amount control to the throttle valve fresh air amount control can be performed at an optimal timing.

According to the invention, the opening degree for the EGR valve differential pressure control for the differential pressure across the EGR valve to reach the EGR valve target differential pressure is calculated based on the actual EGR gas amount and the gas state quantities across the EGR valve. In the case where the correction for corresponding to the environmental condition is performed during the fresh air amount control for the internal combustion engine, the effect of the correction is reflected in the actual fresh air amount. Hence, according to the invention, the opening degree for the EGR valve differential pressure control corresponding to the environmental condition can be calculated based on the operation condition including the actual fresh air amount.

According to the invention, the differential pressure across the EGR valve during the execution of the throttle valve fresh air amount control is controlled at the EGR valve target differential pressure by the feedback control. Hence, according to the invention, the differential pressure across the EGR valve at a time when the switching to the EGR valve fresh air amount control is performed can be allowed to approach the EGR valve target differential pressure in an accurate manner.

According to the third aspect, the EGR valve target differential pressure is calculated in accordance with the closing degree of the throttle valve. As the closing degree of the throttle valve increases (closing side), the switching from the throttle valve fresh air amount control to the EGR valve fresh air amount control becomes less likely to be immediately performed. In other words, the closing degree of the throttle valve is an index for the possibility of the switching of the fresh air amount control from the throttle valve fresh air amount control to the EGR valve fresh air amount control. Hence, according to the invention, the calculation of the EGR valve target differential pressure taking the possibility of the switching of the fresh air amount control into account can be performed.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a diagram illustrating a configuration of an engine system to which a control device according to Embodiment 1 of the invention is applied;

FIG. 2 is a time chart illustrating changes in various state quantities at a time of a feedback control function switching;

FIG. 3 is a diagram for showing the feedback control function switching with respect to operation conditions;

FIG. 4 is a diagram illustrating a map defining a target differential pressure across a Dth valve corresponding to an EGR valve actual opening degree;

FIG. 5 is a diagram illustrating a map defining a target differential pressure across an EGR valve corresponding to a Dth valve actual closing degree;

FIG. 6 is a control block diagram in which function blocks for calculating a minimum Dth valve closing degree A are extracted from control functions of an ECU;

FIG. 7 is a control block diagram in which function blocks for calculating a maximum EGR valve opening degree B are extracted from the control functions of the ECU;

FIG. 8 is a flowchart illustrating a former half of a routine for a fresh air amount control that is executed by the control device according to Embodiment 1 of the invention;

FIG. 9 is a flowchart illustrating a latter half of the routine for the fresh air amount control that is executed by the control device according to Embodiment 1 of the invention;

FIG. 10 is a diagram illustrating a configuration of an engine system to which a control device according to an alternative example is applied;

FIG. 11 is a control block diagram in which function blocks for calculating the minimum Dth valve closing degree A are extracted from control functions of an ECU according to the example;

FIG. 12 is a control block diagram in which function blocks for calculating the maximum EGR valve opening degree B are extracted from the control functions of the ECU according to the example;

FIG. 13 is a flowchart illustrating a former half of a routine for the fresh air amount control that is executed by the control device according to the example;

FIG. 14 is a diagram illustrating a configuration of an engine system to which a control device according to Embodiment 2 of the invention is applied;

FIG. 15 is a flowchart illustrating a former half of a routine for the fresh air amount control that is executed by the control device according to Embodiment 2 of the invention; and

FIG. 16 is a flowchart illustrating a latter half of the routine for the fresh air amount control that is executed by the control device according to Embodiment 2 of the invention.

## DETAILED DESCRIPTION OF EMBODIMENTS

Hereinafter, embodiments of the invention will be described with reference to accompanying drawings.

Embodiment 1.

[Configuration of Embodiment 1]

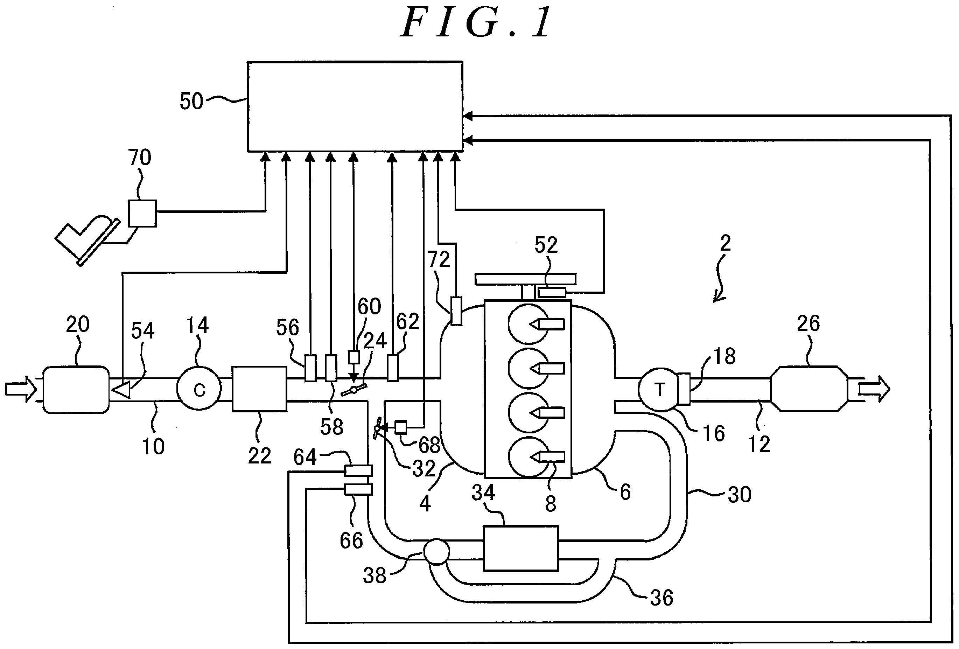

FIG. 1 is a diagram illustrating a configuration of an engine system to which a control device according to Embodiment 1 of the invention is applied. An internal combustion engine according to this embodiment is a turbocharger-attached diesel engine (hereinafter, simply referred to as an "engine"). Four cylinders are provided in series in a main body 2 of the engine, and an injector 8 is disposed for each of the cylinders. An intake manifold 4 and an exhaust manifold 6 are attached to the engine main body 2. An intake passage 10, through which fresh air received from an air cleaner 20 flows, is connected to the intake manifold 4. A compressor 14 of the turbocharger is attached to the intake passage 10. In the intake passage 10, a diesel throttle valve (hereinafter, also referred to as a "Dth valve") 24 is disposed on the downstream side of the compressor 14. On the intake passage 10, an intercooler 22 is provided between the compressor 14 and the Dth valve 24. An exhaust passage 12, which releases exhaust gas coming out of the engine main body 2 into the atmosphere, is connected to the exhaust manifold 6. A turbine 16 of the turbocharger is attached to the exhaust passage 12. The turbocharger is a variable capacity-type turbocharger, and the turbine 16 is provided with a variable nozzle 18. On the exhaust passage 12, a catalyst device 26 for exhaust gas control is disposed on the downstream side of the turbine 16.

The engine according to this embodiment is provided with an EGR device that recirculates the exhaust gas from an exhaust system to an intake system. The EGR device connects a position on the downstream side of the Dth valve 24 in the intake passage 10 to the exhaust manifold 6 by an EGR passage 30. An EGR valve 32 is disposed in the EGR passage 30. On the EGR passage 30, an EGR cooler 34 is provided on an exhaust side of the EGR valve 32. A bypass passage 36, which bypasses the EGR cooler 34, is disposed on the EGR passage 30. A bypass valve 38, which switches a direction in which the exhaust gas flows, is disposed at a place where the bypass passage 36 merges with the EGR passage 30 after branching from the EGR passage 30.

The engine system according to this embodiment is provided with an electronic control unit (ECU) 50. The ECU 50 is a control device that totally controls the entire engine system. The control device according to this embodiment is embodied as a function of the ECU 50.

The ECU 50 receives and processes signals of sensors of the engine system. The sensors are attached to various places in the engine system. An air flow meter 54, which detects an actual fresh air amount "gadly", is attached to the intake passage 10 on the downstream side of the air cleaner 20. In addition, a temperature sensor 56 that detects a gas temperature in front of the Dth valve "thia" and a pressure sensor 58 that detects a gas pressure in front of the Dth valve "pia" are attached to the intake passage 10 on the upstream side of the Dth valve 24. Furthermore, an opening degree sensor 60 that detects an actual closing degree of the Dth valve is attached to the Dth valve 24. An intake pressure sensor 62, which detects an intake pressure "pim", is attached to the intake passage 10 on the downstream side of the Dth valve 24. A temperature sensor 72, which detects an intake manifold gas temperature, is attached to the intake manifold 4. A pressure sensor 64 that detects a gas pressure in front of the EGR valve "pegr" and a temperature sensor 66 that detects a gas temperature in front of the EGR valve "thegr" are attached to the EGR passage 30 on the upstream side of the EGR valve 32. An opening degree sensor 68 that detects an actual opening degree of the EGR valve is attached to the EGR valve 32. A rotation speed sensor 52 that detects a crankshaft rotation speed, an accelerator opening degree sensor 70 that outputs a signal corresponding to an accelerator pedal opening degree, and the like are attached, too. The ECU 50 operates each actuator in accordance with a predetermined control program by processing the signal received from each of the sensors. The actuators operated by the ECU 50 include the variable nozzle 18, the injector 8, the EGR valve 32, and the Dth valve 24. Multiple actuators and sensors other than those illustrated in the drawing are connected to the ECU 50 as well, but description thereof will be omitted in this specification.

[Operation of Embodiment 1]

Engine controls that are executed by the ECU 50 include a fresh air amount control. During the fresh air amount control according to this embodiment, an operation amount of the Dth valve 24 or the EGR valve 32 is determined by a feedback control such that the actual fresh air amount or a state quantity correlated with the actual fresh air amount, such as an actual EGR rate and an actual EGR gas amount, becomes a target value.

When the operation amount of the Dth valve 24 and the operation amount of the EGR valve 32 are subjected to the feedback at the same time, a deterioration of controllability attributable to an interference occurs. In this regard, during the fresh air amount control according to this embodiment, the feedback control of the fresh air amount using the Dth valve 24 (hereinafter, referred to as a "Dth valve fresh air amount control") and the feedback control of the fresh air amount using the EGR valve 32 (hereinafter, referred to as an "EGR valve fresh air amount control") are switched and executed.

A control responsiveness and a converging performance during the execution of the Dth valve fresh air amount control increasingly deteriorate as a pressure difference between the gas pressure on the upstream side of the Dth valve 24 and the gas pressure on the downstream side of the Dth valve 24 in the intake passage 10 (hereinafter, referred to as a "differential pressure across the Dth valve") decreases. Accordingly, in a case where the feedback control function switching is performed from the Dth valve fresh air amount control to the EGR valve fresh air amount control, the feedback control function switching is required to be performed within a range in which the differential pressure across the Dth valve has a differential pressure at which the control responsiveness can be ensured. Still, in a case where the feedback control function switching is performed from the Dth valve fresh air amount control to the EGR valve fresh air amount control within the range in which the differential pressure across the Dth valve has the differential pressure at which the control responsiveness can be ensured, a flow path resistance increases and a deterioration of fuel efficiency ensues as the differential pressure across the Dth valve increases.

In this regard, during the fresh air amount control according to this embodiment, the feedback control function switching from the Dth valve fresh air amount control to the EGR valve fresh air amount control is performed in a case where the differential pressure across the Dth valve falls below a minimum differential pressure at which the control responsiveness can be ensured (hereinafter, referred to as a "minimum differential pressure across the Dth valve") during the execution of the Dth valve fresh air amount control. Likewise, in a case where the feedback control function switching from the EGR valve fresh air amount control to the Dth valve fresh air amount control is performed, the feedback control function switching is performed in a case where the pressure difference between the gas pressure on the upstream side of the EGR valve 32 and the gas pressure on the downstream side of the EGR valve 32 in the EGR passage 30 (hereinafter, referred to as a "differential pressure across the EGR valve") falls below a minimum differential pressure at which the control responsiveness can be ensured (hereinafter, referred to as a "minimum differential pressure across the EGR valve") during the execution of the EGR valve fresh air amount control.

When the differential pressure across the EGR valve during the switching is not controlled at the minimum differential pressure across the EGR valve during the feedback control function switching from the Dth valve fresh air amount control to the EGR valve fresh air amount control, the control responsiveness immediately after the switching and the fuel efficiency immediately after the switching deteriorate. In this regard, during the fresh air amount control according to this embodiment, a differential pressure control for keeping the differential pressure across the EGR valve during the switching at the minimum differential pressure across the EGR valve (hereinafter, referred to as an "EGR valve differential pressure control") is performed during the feedback control function switching from the Dth valve fresh air amount control to the EGR valve fresh air amount control. Likewise, during the feedback control function switching from the EGR valve fresh air amount control to the Dth valve fresh air amount control, a differential pressure control for keeping the differential pressure across the Dth valve during the switching at the minimum differential pressure across the Dth valve (hereinafter, referred to as a "Dth valve differential pressure control") is performed.

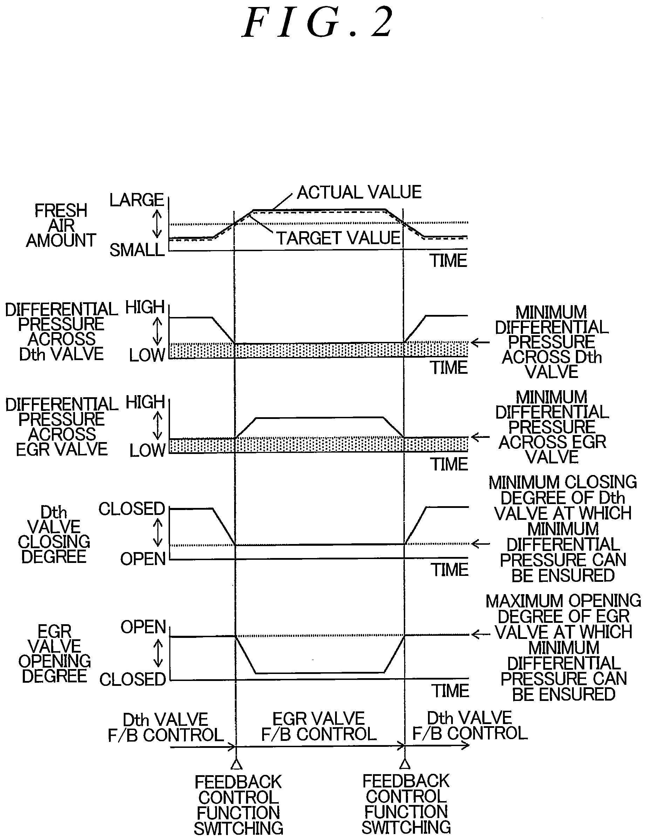

Hereinafter, the feedback control function switching and the differential pressure control during the fresh air amount control according to this embodiment will be described in detail with reference to a time chart. FIG. 2 is a time chart illustrating changes in various state quantities at a time of the feedback control function switching. As illustrated in the drawing, during the Dth valve fresh air amount control, the Dth valve closing degree is determined by the feedback control such that the actual fresh air amount, which is an actual value of the fresh air amount, approaches a target fresh air amount that is the target value. In addition, the EGR valve differential pressure control is executed in tandem with the Dth valve fresh air amount control during the execution of the Dth valve fresh air amount control. During the EGR valve differential pressure control, the EGR valve opening degree is handled such that the differential pressure across the EGR valve approaches the minimum differential pressure across the EGR valve. The EGR valve differential pressure control will be described in detail later.

When the target fresh air amount increases during the Dth valve fresh air amount control, the Dth valve closing degree decreases (changes toward an opening side) in response to the increase in the target fresh air amount. At this time, the differential pressure across the Dth valve is reduced in response to the decrease in the Dth valve closing degree. Then, in a case where the differential pressure across the Dth valve falls below the minimum differential pressure across the Dth valve, the fresh air amount control is switched from the Dth valve fresh air amount control to the EGR valve fresh air amount control. The differential pressure across the EGR valve during the switching is controlled at the minimum differential pressure across the EGR valve by the EGR valve differential pressure control.

After the EGR valve fresh air amount control is initiated, the EGR valve opening degree is determined by the feedback control such that the actual fresh air amount approaches the target fresh air amount. In addition, the Dth valve differential pressure control is executed in tandem with the EGR valve fresh air amount control during the execution of the EGR valve fresh air amount control. During the Dth valve differential pressure control, the Dth valve closing degree is handled such that the differential pressure across the Dth valve approaches the minimum differential pressure across the Dth valve. The Dth valve differential pressure control will be described in detail later.

After the switching to the EGR valve fresh air amount control, the EGR valve opening degree decreases (changes toward a closing side) in response to an increase in the target fresh air amount. Meanwhile, the differential pressure across the Dth valve is maintained at the minimum differential pressure across the Dth valve by the Dth valve differential pressure control.

Then, when the target fresh air amount decreases during the EGR valve fresh air amount control, the EGR valve opening degree increases (changes toward an opening side) in response to the decrease in the target fresh air amount. At this time, the differential pressure across the EGR valve is reduced in response to the increase in the EGR valve opening degree. Then, when the differential pressure across the EGR valve falls below the minimum differential pressure across the EGR valve at which the control responsiveness can be ensured, the feedback control function is switched from the EGR valve fresh air amount control to the Dth valve fresh air amount control.

According to the fresh air amount control described above, the switching from the Dth valve fresh air amount control in a state where the differential pressure across the Dth valve is the minimum differential pressure across the Dth valve to the EGR valve fresh air amount control in a state where the differential pressure across the EGR valve is the minimum differential pressure across the EGR valve occurs during the course of the increase in the fresh air amount. In addition, according to the fresh air amount control described above, the switching from the EGR valve fresh air amount control in a state where the differential pressure across the EGR valve is the minimum differential pressure across the EGR valve to the Dth valve fresh air amount control in a state where the differential pressure across the Dth valve is the minimum differential pressure across the Dth valve occurs during the course of the decrease in the fresh air amount. Accordingly, the deterioration of the control responsiveness can be suppressed before and after the feedback control function switching and the deterioration of the fuel efficiency can be minimized.

In the time chart that is illustrated in FIG. 2, the Dth valve closing degree is controlled, such that the differential pressure across the Dth valve becomes the minimum differential pressure across the Dth valve, during the Dth valve differential pressure control during the execution of the EGR valve fresh air amount control. During the execution of the EGR valve fresh air amount control, however, there is little need for maintaining the differential pressure across the Dth valve at the minimum differential pressure across the Dth valve to be prepared for the feedback control function switching insofar as the feedback control function is unlikely to be immediately switched to the Dth valve fresh air amount control under current operation conditions. In other words, an improvement of the fuel efficiency that is attributable to a decrease in the flow path resistance is expected insofar as the Dth valve closing degree can be further reduced (changed toward the opening side) in the case of such operation conditions.

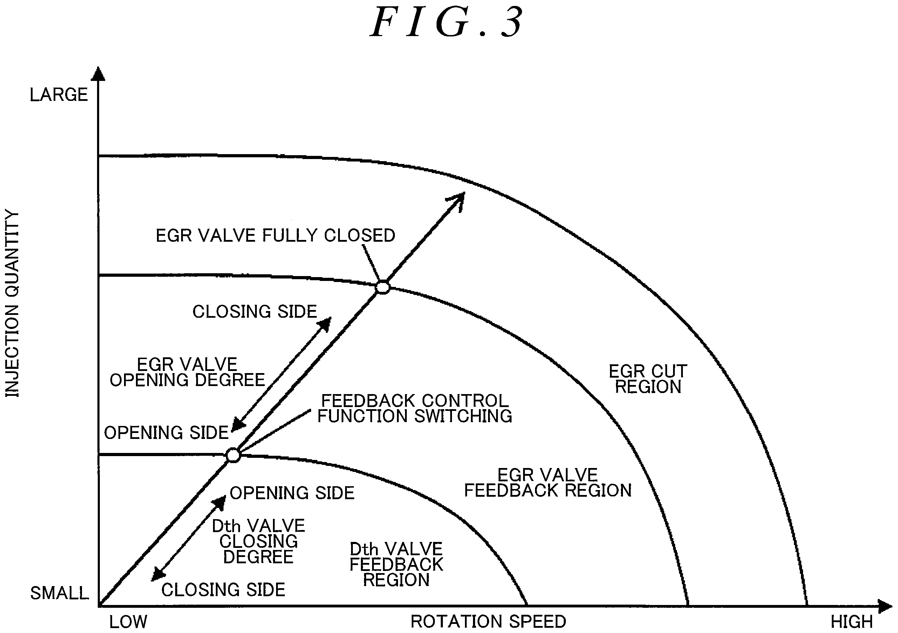

FIG. 3 is a diagram for showing the feedback control function switching with respect to the operation conditions. As illustrated in the drawing, during the fresh air amount control according to this embodiment, the feedback control function switches from the Dth valve fresh air amount control to the EGR valve fresh air amount control when a rotation speed and an injection quantity increase. After the switching to the EGR valve fresh air amount control is performed, the EGR valve opening degree decreases (changes toward the closing side) as the rotation speed and the injection quantity increase. In this regard, the EGR valve opening degree can be used as an index for determining the possibility of the feedback control function switching from the EGR valve fresh air amount control to the Dth valve fresh air amount control.

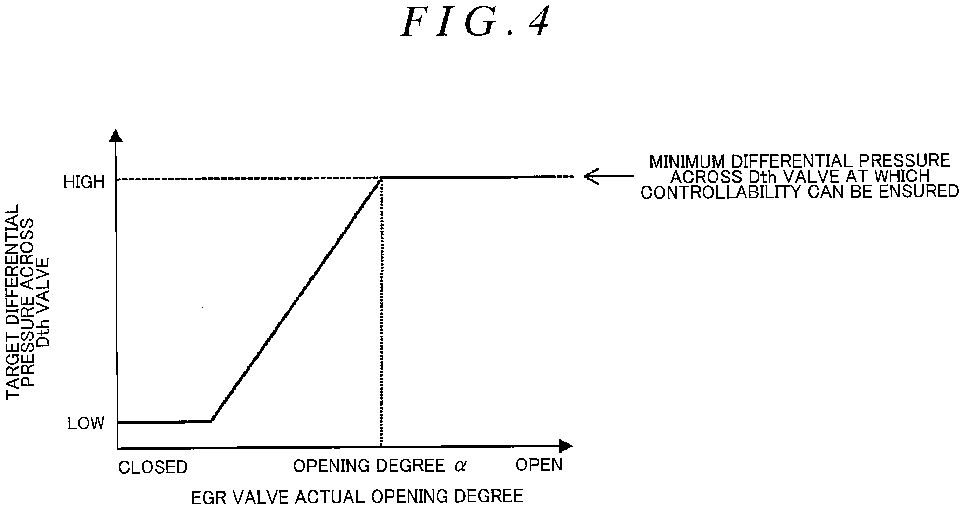

During the fresh air amount control according to this embodiment, a target value of the differential pressure across the Dth valve during the Dth valve differential pressure control (hereinafter, referred to as a "target differential pressure across the Dth valve") is changed based on the EGR valve opening degree during the execution of the EGR valve fresh air amount control. FIG. 4 is a diagram illustrating a map defining the target differential pressure across the Dth valve corresponding to the EGR valve actual opening degree. As illustrated in the drawing, the target differential pressure across the Dth valve can be calculated based on the EGR valve actual opening degree. More specifically, the target differential pressure across the Dth valve is basically calculated as a value of the minimum differential pressure across the Dth valve, and is calculated to be lower than the minimum differential pressure across the Dth valve in a partial region where the possibility of the feedback control function switching is low, that is, in a partial region where the EGR valve actual opening degree is further on the closing side than a predetermined opening degree $\alpha$ is. The predetermined opening degree $\alpha$ may be an EGR opening degree at which the differential pressure across the Dth valve can be controlled at the minimum differential pressure across the Dth valve in a period until the differential pressure across the EGR valve falls below the minimum differential pressure across the EGR valve in view of a control operation cycle of the Dth valve differential pressure control, a control operation cycle of the EGR valve fresh air amount control, the control responsiveness of the Dth valve 24 and the EGR valve 32, and the like. According to this control, the differential pressure across the Dth valve at a timing of no feedback control function switching can be lower than the minimum differential pressure across the Dth valve while the differential pressure across the Dth valve during the feedback control function switching realizes the minimum differential pressure across the Dth valve. Accordingly, the fuel efficiency can be further improved while the control responsiveness is ensured before and after the feedback control function switching.

In the fresh air amount control described above, the control for changing the differential pressure across the Dth valve to a value less than the minimum differential pressure across the Dth valve is executed during the Dth valve differential pressure control during the execution of the EGR valve fresh air amount control. Likewise, a control for changing the differential pressure across the EGR valve to a value less than the minimum differential pressure across the EGR valve can be executed during the EGR valve differential pressure control during the execution of the Dth valve fresh air amount control. In this case, a target differential pressure across the EGR valve corresponding to the Dth valve actual closing degree may be calculated by the use of a map defined such that a target value of the differential pressure across the EGR valve (hereinafter, referred to as the "target differential pressure across the EGR valve") is less than the minimum differential pressure across the EGR valve in the region where the possibility of the feedback control function switching is low, that is, in a partial region where the Dth valve actual closing degree is on the closing side. The calculation of the target differential pressure across the EGR valve will be described in more detail below.

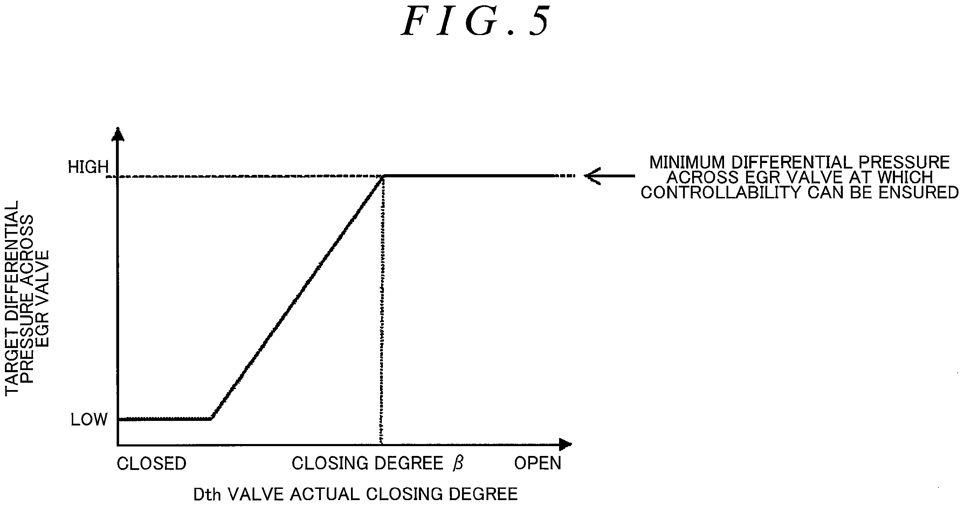

FIG. 5 is a diagram illustrating the map defining the target differential pressure across the EGR valve corresponding to the Dth valve actual closing degree. As illustrated in the drawing, the target differential pressure across the EGR valve can be calculated based on the Dth valve actual closing degree. More specifically, the target differential pressure across the EGR valve is basically calculated as a value of the minimum differential pressure across the EGR valve, and is calculated to be lower than the minimum differential pressure across the EGR valve in the partial region where the possibility of the feedback control function switching is low, that is, in the partial region where the Dth valve actual closing degree is further on the closing side than a predetermined closing degree $\beta$ is. The predetermined closing degree $\beta$ may be a Dth valve closing degree at which the differential pressure across the EGR valve can be controlled at the minimum differential pressure across the EGR valve in a period until the differential pressure across the Dth valve falls below the minimum differential pressure across the Dth valve in view of a control operation cycle of the EGR valve differential pressure control, a control operation cycle of the Dth valve fresh air amount control, the control responsiveness of the Dth valve 24 and the EGR valve 32, and the like. According to this control, the differential pressure across the EGR valve at the timing of no feedback control function switching can be lower than the minimum differential pressure across the EGR valve while the differential pressure across the EGR valve during the feedback control function switching realizes the minimum differential pressure across the EGR valve. Accordingly, the fuel efficiency can be further improved while the control responsiveness is ensured before and after the feedback control function switching.

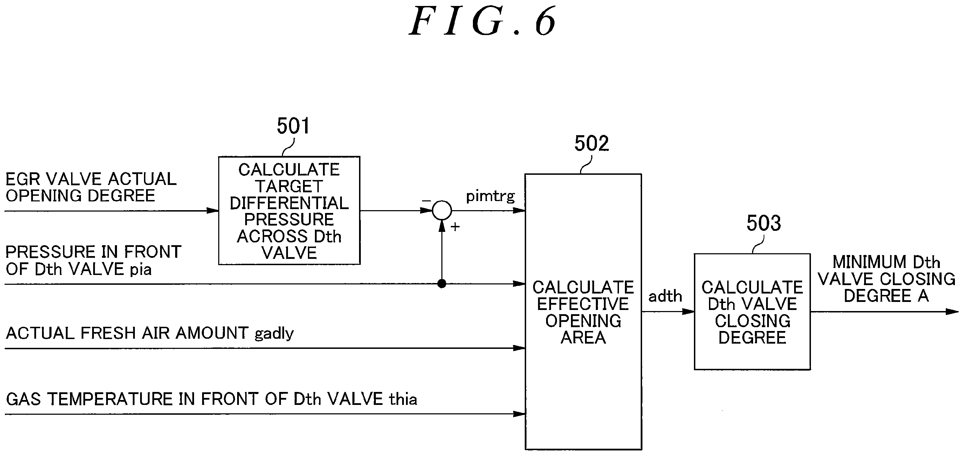

Hereinafter, the Dth valve differential pressure control that is executed during the fresh air amount control according to this embodiment will be described in detail with reference to FIG. 6. During the Dth valve differential pressure control according to this embodiment, a minimum closing degree of the Dth valve for ensuring the target differential pressure across the Dth valve (hereinafter, referred to as a "minimum Dth valve closing degree A") is calculated first based on the operation conditions including the actual fresh air amount. Then, the Dth valve closing degree is controlled at the calculated minimum Dth valve closing degree A by a feedforward control.

FIG. 6 is a control block diagram in which function blocks for calculating the minimum Dth valve closing degree A are extracted from control functions of the ECU 50. A calculation unit 501 that is illustrated in this drawing is a function block that performs the calculation of the map illustrated in FIG. 4, and calculates the target differential pressure across the Dth valve by receiving an input of the EGR valve actual opening degree. A calculation unit 502 is a function block that calculates an effective opening area of the Dth valve 24. The actual fresh air amount "gadly", the pressure in front of the Dth valve "pia", and the gas temperature in front of the Dth valve "thia" are input to the calculation unit 502. A target intake pressure "pimtrg", which is calculated by subtracting the target differential pressure across the Dth valve calculated by the calculation unit 501 from the pressure in front of the Dth valve "pia", is input to the calculation unit 502 as well. In a calculation unit 503, an effective opening area "adth" of the Dth valve 24 in a case where the target differential pressure across the Dth valve is realized is calculated by the use of a nozzle formula shown in the following Equation (1). In the following Equation (1), κ represents a specific heat ratio and R represents a gas constant.

[Equation 1]

$$adth = \frac{gadly}{Z} \qquad \cdots (1)$$

$$Z = pia * \sqrt{\frac{2}{R * thia}} * \phi$$

$$\phi = \sqrt{\frac{\kappa}{\kappa - 1} * \left(\pi^{\frac{2}{\kappa}} - \pi^{\frac{\kappa + 1}{\kappa}}\right)}$$

$$\pi = \frac{pimtrg}{pia}$$

The effective opening area "adth" of the Dth valve 24 calculated by the calculation unit 502 is input to the calculation unit 503. In the calculation unit 503, the minimum Dth valve closing degree A that corresponds to the input effective opening area "adth" of the Dth valve 24 is calculated by the use of a property map in which a property of the Dth valve closing degree with respect to the effective opening area of the Dth valve is defined.

During the fresh air amount control, an environmental correction for reflecting an environmental condition in the target fresh air amount is performed so that a required torque is realized even in a low-atmospheric temperature environment, a low-water temperature environment, or a low-pressure environment. Since the actual fresh air amount is a value reflecting content of the environmental correction, the above-described minimum Dth valve closing degree A can be calculated as a value that corresponds to the environmental condition. Hence, according to the fresh air amount control of this embodiment, the Dth valve differential pressure control that corresponds to the environmental condition can be performed by the Dth valve closing degree being controlled at the minimum Dth valve closing degree A.

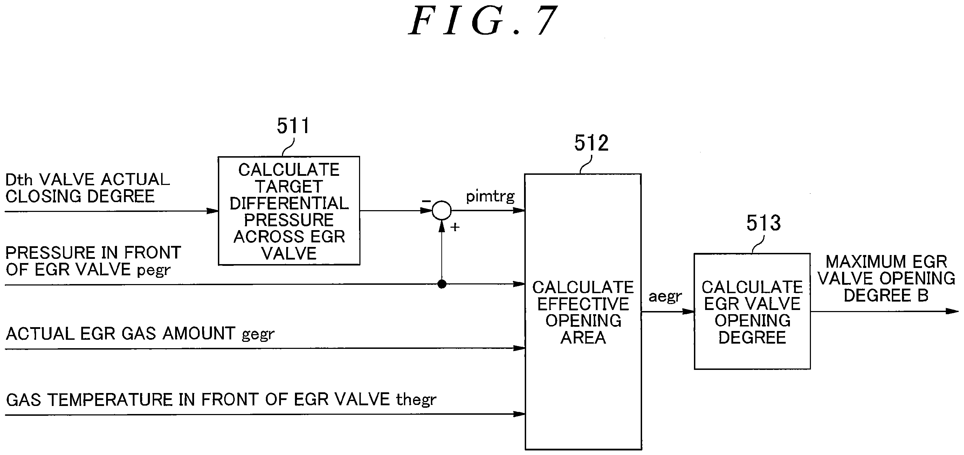

Hereinafter, the EGR valve differential pressure control that is executed during the fresh air amount control according to this embodiment will be described in detail with reference to FIG. 7. During the EGR valve differential pressure control according to this embodiment, a maximum opening degree of the EGR valve for ensuring the target differential pressure across the EGR valve (hereinafter, referred to as a "maximum EGR valve opening degree B") is calculated first based on the operation conditions including the actual EGR gas amount. Then, the EGR valve opening degree is controlled at the calculated maximum EGR valve opening degree B by a feedforward control.

FIG. 7 is a control block diagram in which function blocks for calculating the maximum EGR valve opening degree B are extracted from the control functions of the ECU 50. A calculation unit 511 that is illustrated in this drawing calculates the target differential pressure across the EGR valve by receiving an input of the Dth valve actual closing degree. A calculation unit 512 is a function block that calculates an effective opening area of the EGR valve 32. An actual EGR gas amount "gegr", the pressure in front of the EGR valve "pegr", and the gas temperature in front of the EGR valve "thegr" are input to the calculation unit 512. The target intake pressure "pimtrg", which is calculated by subtracting the target differential pressure across the EGR valve calculated by the calculation unit 511 from the pressure in front of the EGR valve "pegr", is input to the calculation unit 512 as well. The actual EGR gas amount "gegr" is calculated by differentiating the actual fresh air amount from an actual in-cylinder inflow air amount. At this time, the actual in-cylinder inflow air amount can be calculated with a function that uses the actual intake pressure which is detected by the intake pressure sensor 62 and the intake manifold gas temperature which is detected by the temperature sensor 72. In a calculation unit 513, an effective opening area "aegr" of the EGR valve 32 in a case where the target differential pressure across the EGR valve is realized is calculated by the use of a nozzle formula shown in the following Equation (2). In the following Equation (2), $\kappa$ represents a specific heat ratio and R represents a gas constant.

[Equation 2]

$$aegr = \frac{gegr}{Z} \qquad \cdots (2)$$

$$Z = pegr * \sqrt{\frac{2}{R * thegr}} * \phi$$

$$\phi = \sqrt{\frac{\kappa}{\kappa - 1} * (\pi^{\frac{2}{\kappa}} - \pi^{\frac{\kappa+1}{\kappa}})}$$

$$\pi = \frac{pimtrg}{pegr}$$

The effective opening area "aegr" of the EGR valve 32 calculated by the calculation unit 512 is input to the calculation unit 513. In the calculation unit 513, the maximum EGR valve opening degree B that corresponds to the input effective opening area "aegr" of the EGR valve 32 is calculated by the use of a property map in which a property of the EGR valve opening degree with respect to the effective opening area of the EGR valve is defined.

Since the actual EGR gas amount is a value reflecting the content of the environmental correction as is the case with the above-described actual fresh air amount, the maximum EGR valve opening degree B that is calculated based on the operation conditions including the actual EGR gas amount can be calculated as a value that corresponds to the environmental condition. Hence, according to the fresh air amount control of this embodiment, the EGR valve differential pressure control that corresponds to the environmental condition can be performed by the EGR valve opening degree being controlled at the maximum EGR valve opening degree B.

[Specific Processing of Embodiment 1]

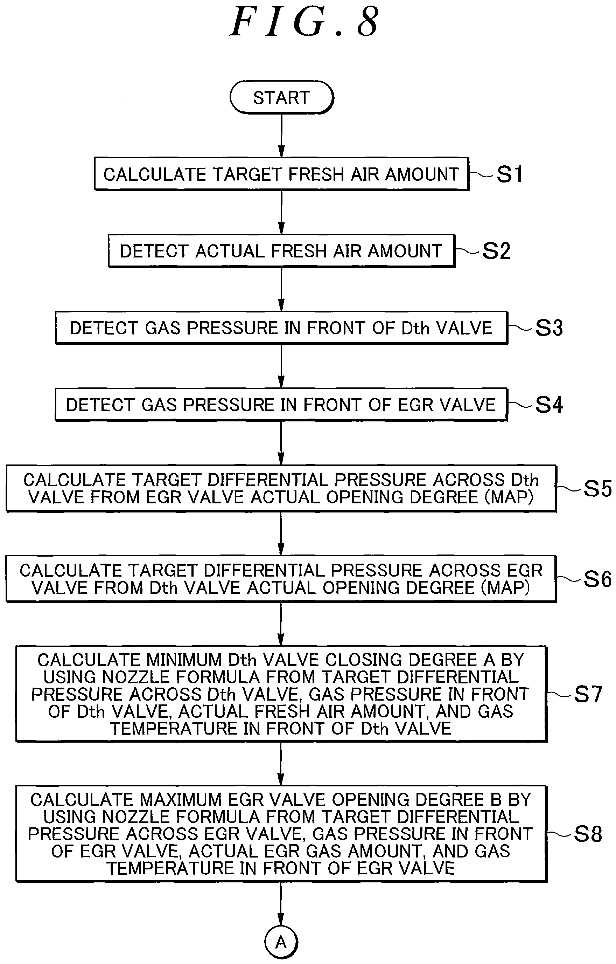

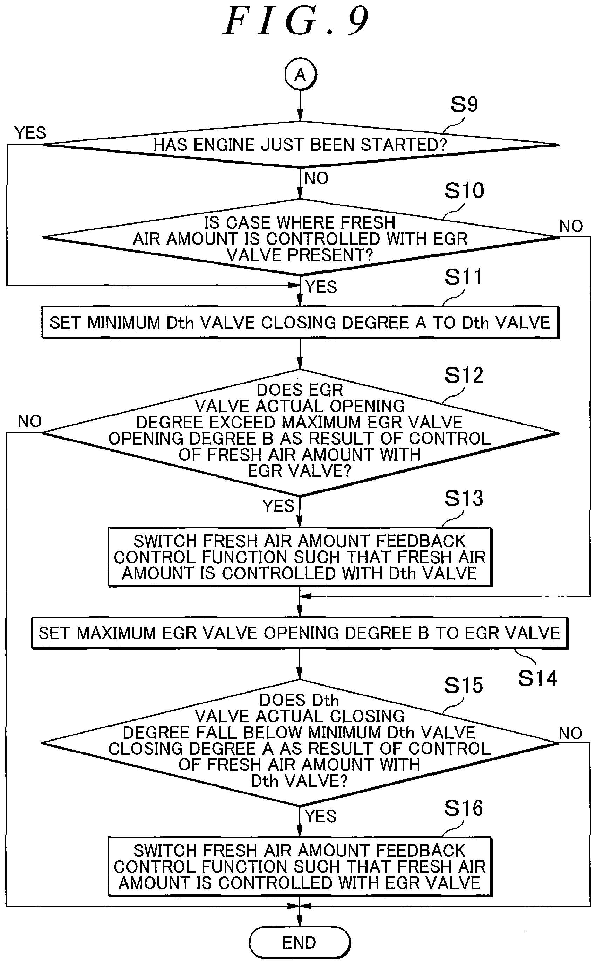

Hereinafter, a specific processing during the fresh air amount control described above will be described in detail with reference to a flowchart. FIG. 8 is a flowchart illustrating a former half of a routine for the fresh air amount control that is executed by the ECU 50 according to Embodiment 1 of the invention. FIG. 9 is a flowchart illustrating a latter half of the routine for the fresh air amount control that is executed by the ECU 50 according to Embodiment 1 of the invention.

In Step S1 of the routine that is illustrated in FIG. 8, the target fresh air amount is calculated from the engine rotation speed that is measured from the signal of the rotation speed sensor 52 and the fuel injection quantity that is obtained from the signal of the accelerator opening degree sensor 70. In Step S2, the actual fresh air amount is detected from the signal of the air flow meter 54. In Step S3, the gas pressure in front of the Dth valve is detected from the signal of the pressure sensor 58. In Step S4, the gas pressure in front of the EGR valve is detected from the signal of the pressure sensor 64. The processing of the above-described steps is a processing for obtaining data required for a processing in steps to be described later. Accordingly, the order of these steps can be appropriately changed.

Then, in Step S5, a processing for calculating the target differential pressure across the Dth valve is performed. More specifically, in Step S5, the target differential pressure across the Dth valve that corresponds to the actual opening degree of the EGR valve which is obtained from the signal of the opening degree sensor 68 is calculated by the use of the map illustrated in FIG. 4, which defines a relationship between the actual opening degree of the EGR valve and the target differential pressure across the Dth valve. Then, in Step S6, the target differential pressure across the EGR valve that corresponds to the actual closing degree of the Dth valve which is obtained from the signal of the opening degree sensor 60 is calculated by the use of the map illustrated in FIG. 5, which defines a relationship between an actual opening degree of the Dth valve and the target differential pressure across the EGR valve.

Then, in Step S7, the minimum Dth valve closing degree A is calculated. More specifically, in Step S7, the minimum Dth valve closing degree A is calculated, by the use of the nozzle formula shown in Equation (1) above, from the target differential pressure across the Dth valve calculated in Step S5, the gas pressure in front of the Dth valve calculated in Step S3, the actual fresh air amount calculated in Step S2, and the gas temperature in front of the Dth valve obtained from the signal of the temperature sensor 56.

Then, in Step S8, the maximum EGR valve opening degree B is calculated. More specifically, in Step S8, the maximum EGR valve opening degree B is calculated, by the use of the nozzle formula shown in Equation (2) above, from the actual EGR gas amount calculated from the intake manifold gas temperature obtained from the signal of the temperature sensor 72, the intake pressure obtained from the intake pressure sensor 62, and the actual fresh air amount calculated in Step S2, the target differential pressure across the EGR valve calculated in Step S6, the gas pressure in front of the EGR valve calculated in Step S4, and the gas temperature in front of the EGR valve obtained from the signal of the temperature sensor 66.

The processing proceeds to Step S9 that is illustrated in FIG. 9 after the processing of Step S8 that is illustrated in FIG. 8. In Step S9, it is determined whether or not the engine has just been started. Combustion is likely to become unstable immediately after the engine is started by cranking being performed. Herein, it is determined whether or not the period in which the combustion is unstable immediately after the start of the engine has elapsed based on, for example, whether or not a predetermined period of time has elapsed since firing by the cranking and whether or not a cooling water temperature has reached a predetermined water temperature. In a case where it is determined that the engine has just been started as a result of the determination, it is determined that the EGR valve fresh air amount control, which is the safer one of the EGR valve fresh air amount control and the Dth valve fresh air amount control that are included in the fresh air amount control, should be performed. Then, the processing proceeds to Step S11 (described later).

In a case where it is determined in Step S9 that the engine has not just been started, in contrast, the processing proceeds to the subsequent Step S10 and the presence or absence of a case where the fresh air amount is controlled with the EGR valve is determined. More specifically, it is determined whether or not a result at a time of a calculation in the previous routine is the EGR valve fresh air amount control. In a case where it is determined that the case where the fresh air amount is controlled with the EGR valve is absent as a result of the determination, it is determined that a case where the fresh air amount is controlled with the Dth valve is present. Then, the processing proceeds to Step S14 (described later).

In a case where it is determined in Step S10 that the case where the fresh air amount is controlled with the EGR valve is present, in contrast, the processing proceeds to the subsequent Step S11. In Step S11, the EGR valve fresh air amount control and the Dth valve differential pressure control are executed in tandem with each other. During the EGR valve fresh air amount control, the EGR valve opening degree is determined by the feedback control such that the actual fresh air amount detected in Step S2 approaches the target fresh air amount calculated in Step S1. In addition, during the Dth valve differential pressure control, setting of the Dth valve closing degree to the minimum Dth valve closing degree A calculated in Step S7 is performed.

Then, in Step S12, it is determined whether or not the actual opening degree of the EGR valve exceeds the maximum EGR valve opening degree B calculated in Step S8 as a result of the execution of the EGR valve fresh air amount control. In a case where the actual opening degree of the EGR valve is equal to or less than the maximum EGR valve opening degree B as a result of the execution, it is determined that the EGR valve fresh air amount control should be continuously executed, and this routine is temporarily terminated. Then, the routine illustrated in FIGS. 8 and 9 is executed again from the beginning.

In a case where it is determined in Step S12 that the actual opening degree of the EGR valve exceeds the maximum EGR valve opening degree B, it is determined that the differential pressure across the EGR valve is lower than the minimum differential pressure across the EGR valve. Then, the processing proceeds to the subsequent Step S13, and the feedback control function switching during the fresh air amount control is performed. Specifically, in Step S13, the feedback control function during the fresh air amount control is switched from the EGR valve fresh air amount control to the Dth valve fresh air amount control.

Then, in Step S14, the Dth valve fresh air amount control and the EGR valve differential pressure control are executed in tandem with each other. During the Dth valve fresh air amount control, the Dth valve closing degree is determined by the feedback control such that the actual fresh air amount approaches the target fresh air amount. In addition, during the EGR valve differential pressure control, setting of the EGR valve opening degree to the maximum EGR valve opening degree B calculated in Step S8 is performed. Then, in Step S15, it is determined whether or not the actual closing degree of the Dth valve becomes less than the minimum Dth valve closing degree A calculated in Step S7 as a result of the execution of the Dth valve fresh air amount control. In a case where the actual opening degree of the Dth valve is at least the minimum Dth valve closing degree A as a result of the execution, it is determined that the Dth valve fresh air amount control should be continuously executed, and this routine is temporarily terminated. Then, the routine illustrated in FIGS. 8 and 9 is executed again from the beginning.

In a case where it is determined in Step S15 that the actual closing degree of the Dth valve is less than the minimum Dth valve closing degree A, it is determined that the differential pressure across the Dth valve is lower than the minimum differential pressure across the Dth valve. Then, the processing proceeds to the subsequent Step S16, and the feedback control function switching during the fresh air amount control is performed. Specifically, in Step S16, the feedback control function during the fresh air amount control is switched from the Dth valve fresh air amount control to the EGR valve fresh air amount control. This routine is terminated after the execution of the processing of Step S16. Then, the routine illustrated in FIGS. 8 and 9 is executed again.

By the fresh air amount control being performed in accordance with the routine described above, the differential pressures across the Dth valve 24 and the EGR valve 32 during the feedback control function switching can be controlled at the respective minimum differential pressures. Accordingly, the deterioration of the fuel efficiency can be effectively suppressed while the control responsiveness and the converging performance are ensured during the fresh air amount control.

The invention is not limited to the embodiment described above, and can be put into practice in the forms of various modifications not departing from the scope of the invention as defined by the appended claims. For example, the invention may be put into practice after being modified as follows.

In Embodiment 1 described above, the target fresh air amount is calculated as the control target value for the fresh air amount control and the Dth valve 24 and the EGR valve 32 are controlled such that the actual fresh air amount approaches the target fresh air amount. However, the control target value for the fresh air amount control is not limited to the target fresh air amount. In other words, the actual in-cylinder inflow air amount can be calculated with the function that uses the actual intake pressure which is detected by the intake pressure sensor 62 and the intake manifold gas temperature which is detected by the temperature sensor 72 as described above, and thus the amount of the EGR gas that is suctioned into the cylinder can be calculated with a function subtracting the amount of the fresh air suctioned into the cylinder from the actual in-cylinder inflow air amount. In addition, the EGR rate can also be calculated with the function that uses the actual in-cylinder inflow air amount and the fresh air amount. Furthermore, by an oxygen concentration of the fresh air and an oxygen concentration of the EGR gas being grasped by known means, an intake O2 concentration that is an oxygen concentration of the actual in-cylinder inflow air can also be calculated with a function that uses the fresh air amount. Moreover, the intake manifold gas temperature can also be calculated with the function that uses the fresh air amount by a fresh air temperature and an EGR gas temperature being grasped by known means. Since the EGR rate, the EGR gas amount, the intake O2 concentration, and the intake manifold gas temperature are state quantities that are correlated with the fresh air amount as described above, target values of these state quantities may be used for the fresh air amount control. This also applies to the other embodiments (described later).

In Embodiment 1 described above, the gas pressure in front of the Dth valve, the gas pressure in front of the EGR valve, the intake manifold gas temperature, the gas temperature in front of the Dth valve, the gas temperature in front of the EGR valve, and the intake pressure are directly calculated from the respective signals of the sensors. However, these values may be estimated by the use of a known technique as well.

In Embodiment 1 described above, the target differential pressure across the Dth valve is calculated in accordance with the relationship that is illustrated in FIG. 4. However, a method for calculating the target differential pressure across the Dth valve is not limited thereto, and another map may be used insofar as the minimum differential pressure across the Dth valve can be ensured during the switching or the target differential pressure across the Dth valve may be fixed at the value of the minimum differential pressure across the Dth valve without being changed in accordance with the EGR valve actual opening degree. This also applies to the calculation of the target differential pressure across the EGR valve.

During the fresh air amount control according to Embodiment 1 described above, the Dth valve fresh air amount control and the Dth valve differential pressure control are executed as the control that uses the Dth valve 24 and the EGR valve fresh air amount control and the EGR valve differential pressure control are executed as the control that uses the EGR valve 32. However, during the fresh air amount control according to this embodiment, any one of the control that uses the Dth valve 24 and the control that uses the EGR valve 32 may be substituted with a control according to the other embodiments (described later).

In Embodiment 1 described above, the Dth valve 24 corresponds to the "throttle valve" according to the invention, the Dth valve fresh air amount control corresponds to the "throttle valve fresh air amount control" according to the invention, the EGR valve fresh air amount control corresponds to the "EGR valve fresh air amount control" according to the invention, the Dth valve differential pressure control corresponds to the "throttle valve differential pressure control" according to the invention, the EGR valve differential pressure control corresponds to the "EGR valve differential pressure control" according to the invention, the differential pressure across the Dth valve corresponds to the "first differential pressure" according to the invention, the target differential pressure across the Dth valve corresponds to the "throttle valve target differential pressure" according to the invention, the differential pressure across the EGR valve corresponds to the "second differential pressure" according to the invention, and the target differential pressure across the EGR valve corresponds to the "EGR valve target differential pressure" according to the invention. In addition, in Embodiment 1 described above, the "switching control means" according to the invention is realized by the ECU 50 executing the processing of Steps S12 and S13 or the processing of Steps S15 and S16 described above and the "differential pressure control means" according to the invention is realized by the ECU 50 executing the processing of Step S11 or S14 described above.

Furthermore, in Embodiment 1 described above, the minimum Dth valve closing degree A corresponds to the "closing degree for the throttle valve differential pressure control" according to the invention. Moreover, in Embodiment 1 described above, the "closing degree calculation means" according to the invention is realized by the ECU 50 executing the processing of Step S7 described above, the "switching control means" according to the invention is realized by the ECU 50 executing the processing of Steps S12 and S13 described above, and the "differential pressure control means" according to the invention is realized by the ECU 50 executing the processing of Step S11 described above.

In Embodiment 1 described above, the minimum Dth valve closing degree A corresponds to the "closing degree for the throttle valve differential pressure control" according to the invention. In addition, in Embodiment 1 described above, the "closing degree calculation means" according to the invention is realized by the ECU 50 executing the processing of Step S7 described above.

In Embodiment 1 described above, the maximum EGR valve opening degree B corresponds to the "opening degree for the EGR valve differential pressure control" according to the invention. In addition, in Embodiment 1 described above, the "opening degree calculation means" according to the invention is realized by the ECU 50 executing the processing of Step S8 described above, the "switching control means" according to the invention is realized by the ECU 50 executing the processing of Steps S15 and S16 described above, and the "differential pressure control means" according to the invention is realized by the ECU 50 executing the processing of Step S14 described above.

Furthermore, in Embodiment 1 described above, the maximum EGR valve opening degree B corresponds to the "opening degree for the EGR valve differential pressure control" according to the invention. Moreover, in Embodiment 1 described above, the "opening degree calculation means" according to the invention is realized by the ECU 50 executing the processing of Step S8 described above.

In Embodiment 1 described above, the "EGR valve target differential pressure calculation means" according to the third aspect of the invention is realized by the ECU 50 executing the processing of Step S6 described above.

Alternative Example.

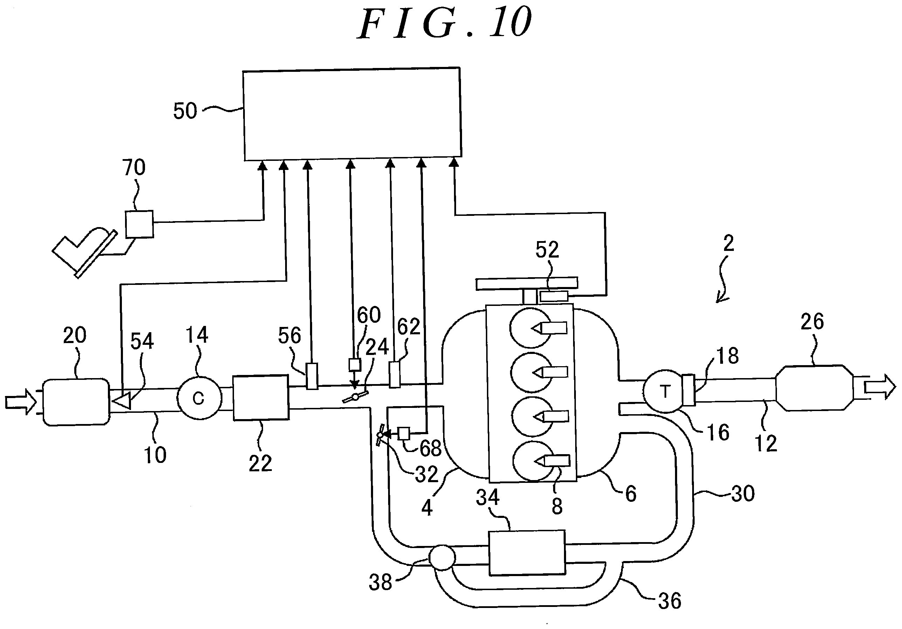

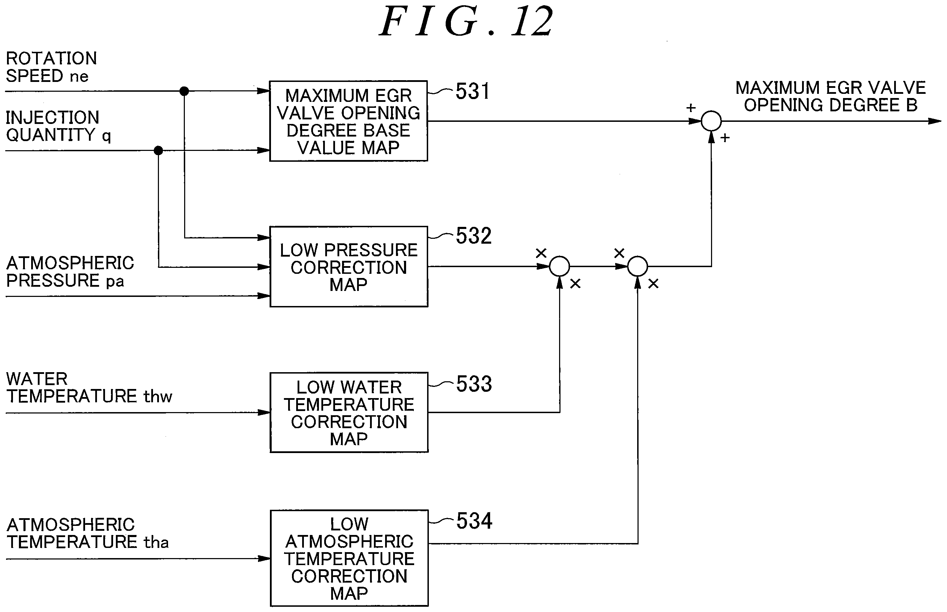

Hereinafter, an alternative example will be described. This example can be realized by a hardware configuration that is illustrated in FIG. 10 being used and the routine that is illustrated in FIG. 12 (described later) and FIG. 9 (described above) being executed by the ECU 50.

[Configuration of the example]

FIG. 10 is a diagram illustrating a configuration of an engine system to which a control device according to the example is applied. The control device that is illustrated in FIG. 10 is similar in configuration to the control device that is illustrated in FIG. 1 except that the control device that is illustrated in FIG. 10 is not provided with the pressure sensor 58 that detects the gas pressure in front of the Dth valve, the pressure sensor 64 that detects the gas pressure in front of the EGR valve, the temperature sensor 66 that detects the gas temperature in front of the EGR valve, and the temperature sensor 72 that detects the intake manifold gas temperature.

[Characteristics of the example]

In the control device according to the example described above, the minimum Dth valve closing degree A and the maximum EGR valve opening degree B are calculated by the use of the state quantities across the Dth valve 24 and the EGR valve 32. Accordingly, in the control device according to the example, the use of the sensors is required for the state quantities across the Dth valve 24 and the EGR valve 32 to be accurately grasped. The control device according to the example is characterized by using a method for calculating the minimum Dth valve closing degree A for realizing the minimum differential pressure across the Dth valve and the maximum EGR valve opening degree B for realizing the minimum differential pressure across the EGR valve without using the state quantities across the Dth valve 24 and the EGR valve 32.

The use of a map that defines the minimum Dth valve closing degree A for realizing the minimum differential pressure across the Dth valve with the rotation speed and the injection quantity regarded as arguments is conceivable as an example of the method for calculating the minimum Dth valve closing degree A. However, a change in the environmental condition is not reflected in this map. Accordingly, in a case where the target fresh air amount and a target EGR rate during the EGR valve fresh air amount control increase due to the environmental condition such as a low water temperature and a low pressure, for example, the differential pressure across the Dth valve exceeds the minimum differential pressure across the Dth valve. In this case, a pumping loss increases, which leads to the deterioration of the fuel efficiency.

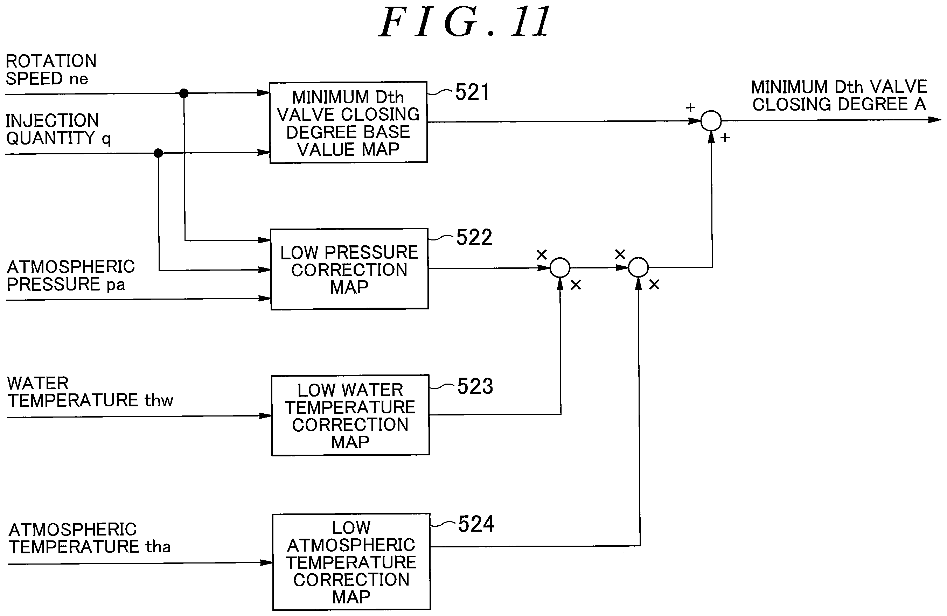

In this regard, in the control device according to the example, the change in the environmental condition is reflected in the minimum Dth valve closing degree A by the following control logic. FIG. 11 is a control block diagram in which function blocks for calculating the minimum Dth valve closing degree A are extracted from control functions of the ECU 50 according to the example. A calculation unit 521 that is illustrated in this drawing is a function block that calculates a base value of the minimum Dth valve closing degree A by using a map. The base value of the minimum Dth valve closing degree A for realizing the minimum differential pressure across the Dth valve is associated with the map that is used for the calculation by the calculation unit 521 with the rotation speed and the injection quantity regarded as the arguments. In the calculation unit 521, the base value of the minimum Dth valve closing degree A that corresponds to an input rotation speed "ne" and an input injection quantity "q" is calculated by the use of this map.

A calculation unit 522 is a function block that calculates a closing degree correction value for reflecting an effect of a barometric pressure change in the minimum Dth valve closing degree A. The closing degree correction value for the minimum Dth valve closing degree A that depends on the barometric pressure change is associated with a map that is used for the calculation by the calculation unit 522 with the rotation speed, the injection quantity, and an atmospheric pressure regarded as the arguments. In the calculation unit 522, the closing degree correction value that corresponds to the input rotation speed "ne", the input injection quantity "q", and an atmospheric pressure "pa" is calculated by the use of this map.

A calculation unit 523 is a function block that calculates a correction coefficient for reflecting an effect of an engine cooling water temperature change in the minimum Dth valve closing degree A. The correction coefficient for the closing degree correction value is associated with a map that is used for the calculation by the calculation unit 523 with the water temperature regarded as the argument. In the calculation unit 523, the correction coefficient that corresponds to an input water temperature "thw" is calculated by the use of this map. A calculation unit 524 is a function block that calculates a correction coefficient for reflecting an effect of an atmospheric temperature change in the minimum Dth valve closing degree A. The correction coefficient for the closing degree correction value is associated with a map that is used for the calculation by the calculation unit 524 with an atmospheric temperature regarded as the argument. In the calculation unit 524, the correction coefficient that corresponds to an input atmospheric temperature "tha" is calculated by the use of this map. The closing degree correction value that is calculated by the calculation unit 522 is added to the base value of the minimum Dth valve closing degree A after multiplication of the correction coefficient calculated by the calculation unit 523 and the correction coefficient calculated by the calculation unit 524 in this order. In this manner, the minimum Dth valve closing degree A that reflects the environmental conditions relating to the water temperature, the atmospheric temperature, and the barometric pressure is calculated, and thus the differential pressure across the Dth valve can be allowed to approach the minimum differential pressure across the Dth valve even in the low-water temperature environment, the low-atmospheric temperature environment, and the low-pressure environment.

In addition, in the control device according to the example, the change in the environmental condition is reflected in the maximum EGR valve opening degree B by the following control logic. FIG. 12 is a control block diagram in which function blocks for calculating the maximum EGR valve opening degree B are extracted from the control functions of the ECU 50 according to the example. A calculation unit 531 that is illustrated in this drawing is a function block that calculates a base value of the maximum EGR valve opening degree B by using a map. In the calculation unit 531, the base value of the maximum EGR valve opening degree B for realizing the minimum differential pressure across the EGR valve is associated with the rotation speed and the injection quantity regarded as the arguments. In the calculation unit 531, the base value of the maximum EGR valve opening degree B that corresponds to the input rotation speed "ne" and the input injection quantity "q" is calculated by the use of this map.

A calculation unit 532 is a function block that calculates an opening degree correction value for reflecting the effect of the barometric pressure change in the maximum EGR valve opening degree B. The opening degree correction value for the maximum EGR valve opening degree B that depends on the barometric pressure change is associated with a map that is used for the calculation by the calculation unit 532 with the rotation speed, the injection quantity, and the atmospheric pressure regarded as the arguments. In the calculation unit 532, the opening degree correction value that corresponds to the input rotation speed "ne", the input injection quantity "q", and the atmospheric pressure "pa" is calculated by the use of this map.

A calculation unit 533 is a function block that calculates a correction coefficient for reflecting the effect of the water temperature change in the maximum EGR valve opening degree B. The correction coefficient for the opening degree correction value is associated with a map that is used for the calculation by the calculation unit 533 with the water temperature regarded as the argument. In the calculation unit 533, the correction coefficient that corresponds to the input water temperature "thw" is calculated by the use of this map. A calculation unit 534 is a function block that calculates a correction coefficient for reflecting the effect of the atmospheric temperature change in the maximum EGR valve opening degree B. The correction coefficient for the opening degree correction value is associated with a map that is used for the calculation by the calculation unit 534 with the atmospheric temperature regarded as the argument. In the calculation unit 534, the correction coefficient that corresponds to the input atmospheric temperature "tha" is calculated by the use of this map. The opening degree correction value that is calculated by the calculation unit 532 is added to the base value of the maximum EGR valve opening degree B after multiplication of the correction coefficient calculated by the calculation unit 533 and the correction coefficient calculated by the calculation unit 534 in this order. In this manner, the maximum EGR valve opening degree B that reflects the environmental conditions relating to the water temperature, the atmospheric temperature, and the barometric pressure is calculated, and thus the differential pressure across the EGR valve can be allowed to approach the minimum differential pressure across the EGR valve even in the low-water temperature environment, the low-atmospheric temperature environment, and the low-pressure environment.

[Specific Processing of the example]

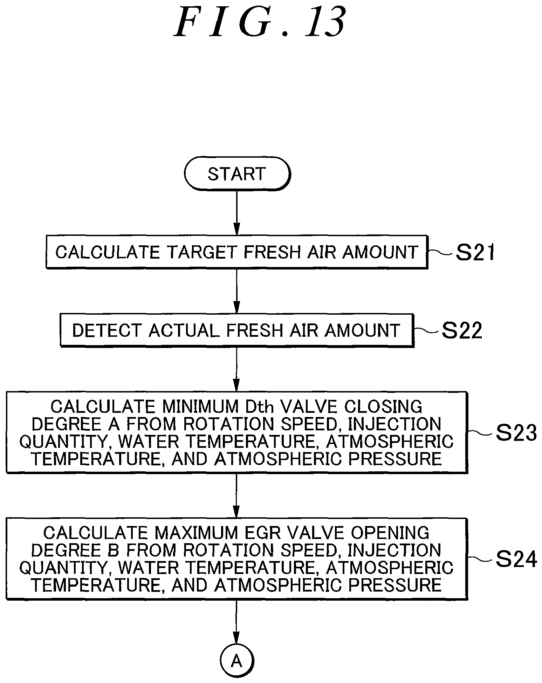

Hereinafter, a specific processing during the fresh air amount control described above will be described in detail with reference to a flowchart. FIG. 13 is a flowchart illustrating a former half of the routine for the fresh air amount control that is executed by the ECU 50 according to the example.

In Step S21 of the routine that is illustrated in FIG. 13, the target fresh air amount is calculated from the engine rotation speed that is measured from the signal of the rotation speed sensor 52 and the fuel injection quantity that is obtained from the signal of the accelerator opening degree sensor 70. In Step S22, the actual fresh air amount is detected from the signal of the air flow meter 54. The processing of the above-described steps is a processing for obtaining data required for a processing in steps to be described later. Accordingly, the order of these steps can be appropriately changed.

In the subsequent Step S23, the minimum Dth valve closing degree A is calculated. More specifically, in Step S23, the calculation of the control logic that is illustrated in FIG. 11 described above is executed. In the subsequent Step S24, the maximum EGR valve opening degree B is calculated. More specifically, in Step S24, the calculation of the control logic that is illustrated in FIG. 12 described above is executed. After the processing of Step S24 that is illustrated in FIG. 13, the processing proceeds to the latter half of the routine for the fresh air amount control that is illustrated in FIG. 9. The routine that is illustrated in FIG. 9 is the same as the latter half of the routine for the fresh air amount control according to Embodiment 1, and thus description thereof will be omitted.

By the fresh air amount control being performed in accordance with the routine described above, the differential pressures across the Dth valve 24 and the EGR valve 32 during the feedback control function switching can be controlled at the respective minimum differential pressures even in the low-temperature environment and the low-pressure environment. Accordingly, the deterioration of the fuel efficiency can be effectively suppressed while the control responsiveness and the converging performance are ensured during the fresh air amount control.

In the example described above, the minimum Dth valve closing degree A on which the environmental correction is performed is calculated in

accordance with the control logic that is illustrated in FIG. 11. However, a method for calculating the minimum Dth valve closing degree A is not limited thereto, and the method may use a control logic that performs any one of a low water temperature correction, a low atmospheric temperature correction, and a low pressure correction as the environmental correction and may be configured to include a correction for corresponding to another environmental condition. This also applies to the calculation of the maximum EGR valve opening degree B.

In addition, the minimum Dth valve closing degree A for realizing the target differential pressure across the Dth valve may be calculated as well although the minimum Dth valve closing degree A for realizing the minimum differential pressure across the Dth valve is calculated in the control device according to the example described above. As a control logic for realizing this calculation function, for example, the function block that calculates the target differential pressure across the Dth valve by receiving the input of the EGR valve actual opening degree (that is, the calculation unit 501 illustrated in FIG. 6) is added to the control logic illustrated in FIG. 11. Then, the calculated target differential pressure across the Dth valve is configured to be input to the calculation unit 521, and the map with which the base value of the minimum Dth valve closing degree A is associated is used in the calculation unit 521 with the target differential pressure across the Dth valve as well as the rotation speed and the injection quantity regarded as the argument. According to this control logic, the minimum Dth valve closing degree A for realizing the target differential pressure across the Dth valve can be calculated.

Likewise, the maximum EGR valve opening degree B for realizing the target differential pressure across the EGR valve may be calculated with regard to the calculation of the maximum EGR valve opening degree B. As a control logic for realizing this calculation function, for example, the function block that calculates the target differential pressure across the EGR valve by receiving the input of the Dth valve actual closing degree (that is, the calculation unit 511 illustrated in FIG. 7) is added to the control logic illustrated in FIG. 12. Then, the calculated target differential pressure across the EGR valve is configured to be input to the calculation unit 531, and the map with which the base value of the maximum EGR valve opening degree B is associated is used in the calculation unit 531 with the target differential pressure across the EGR valve as well as the rotation speed and the injection quantity regarded as the argument. According to this control logic, the maximum EGR valve opening degree B for realizing the target differential pressure across the EGR valve can be calculated.

During the fresh air amount control according to the example described above, the Dth valve fresh air amount control and the Dth valve differential pressure control are executed as the control that uses the Dth valve 24 and the EGR valve fresh air amount control and the EGR valve differential pressure control are executed as the control that uses the EGR valve 32. However, during the fresh air amount control according to this example, any one of the control that uses the Dth valve 24 and the control that uses the EGR valve 32 may be substituted with the control according to Embodiment 1 described above or a control according to the other embodiment (described later).

Embodiment 2.

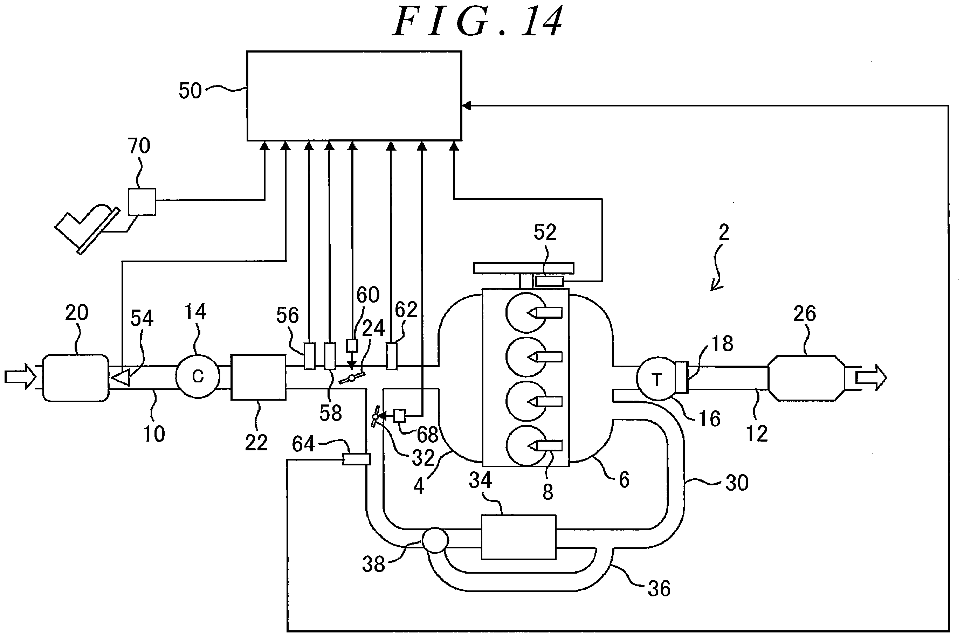

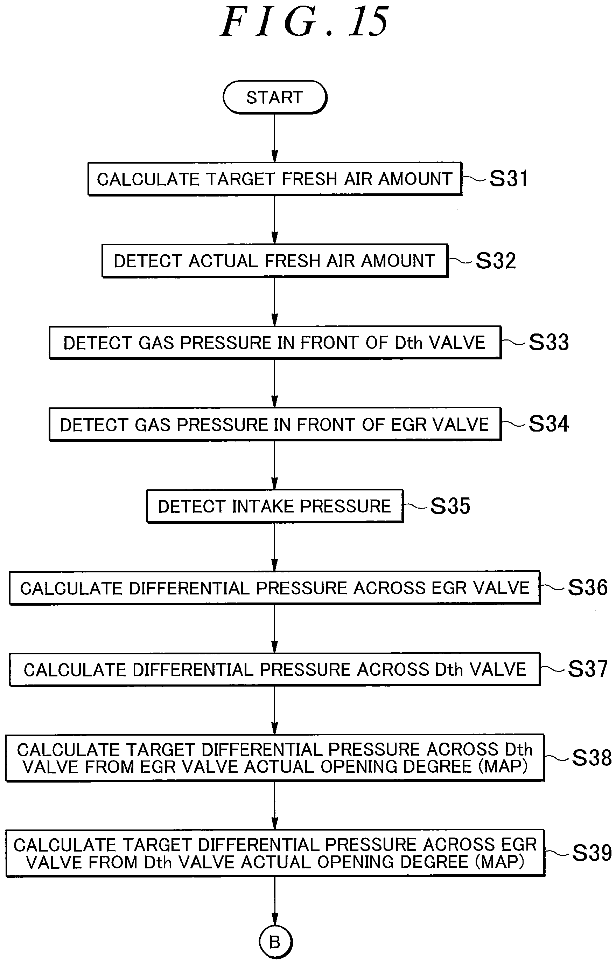

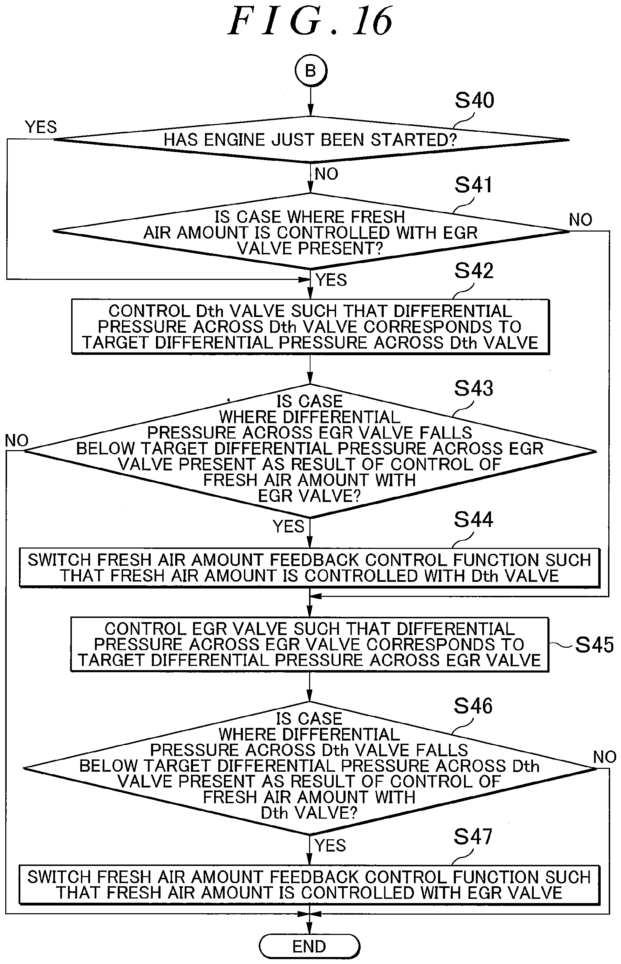

Hereinafter, Embodiment 2 of the invention will be described. Embodiment 2 of the invention can be realized by a hardware configuration that is illustrated in FIG. 14 being used and the routine that is illustrated in FIGS. 15 and 16 (described later) being executed by the ECU 50.

[Configuration of Embodiment 2]

FIG. 14 is a diagram illustrating a configuration of an engine system to which a control device according to Embodiment 2 of the invention is applied. The control device that is illustrated in FIG. 14 is similar in configuration to the control device that is illustrated in FIG. 1 except that the control device that is illustrated in FIG. 14 is not provided with the temperature sensor 66 that detects the gas temperature in front of the EGR valve and the temperature sensor 72 that detects the intake manifold gas temperature.

[Characteristics of Embodiment 2]

In the control device according to Embodiment 2 described above, actual values of the differential pressure across the Dth valve and the differential pressure across the EGR valve are detected based on the state quantities across the Dth valve 24 and the EGR valve 32 and the fresh air amount control is executed by the use of the detected differential pressure across the Dth valve and the detected differential pressure across the EGR valve. More specifically, in the control device according to this Embodiment 2, the feedback control function switching from the Dth valve fresh air amount control to the EGR valve fresh air amount control is performed in a case where the actual value of the differential pressure across the Dth valve falls below the minimum differential pressure across the Dth valve during the execution of the Dth valve fresh air amount control. In addition, in the control device according to this Embodiment 2, the feedback control function switching from the EGR valve fresh air amount control to the Dth valve fresh air amount control is performed in a case where the actual value of the differential pressure across the EGR valve falls below the minimum differential pressure across the EGR valve during the execution of the EGR valve fresh air amount control. According to this feedback control of the fresh air amount, the feedback control function switching timing can be accurately determined based on the detected actual values of the differential pressure across the Dth valve and the differential pressure across the EGR valve.

Furthermore, in the control device according to this Embodiment 2, a determination of the Dth valve closing degree is performed by a feedback control, such that the actual value of the differential pressure across the Dth valve approaches the target differential pressure across the Dth valve, during the Dth valve differential pressure control. In a case where the Dth valve closing degree is determined by the feedback control, the determination is executed in a period coming after the EGR valve fresh air amount control so that the EGR valve fresh air amount control that is executed as the fresh air amount control is not interfered with.

Furthermore, in the control device according to this Embodiment 2, a determination of the EGR valve opening degree is performed by a feedback control, such that the actual value of the differential pressure across the EGR valve approaches the target differential pressure across the EGR valve, during the EGR valve differential pressure control. In a case where the EGR valve opening degree is determined by the feedback control, the determination is executed in a period coming after the Dth valve fresh air amount control so that the Dth valve fresh air amount control that is executed as the fresh air amount control is not interfered with.

According to this differential pressure control, the differential pressure across the Dth valve and the differential pressure across the EGR valve can be ensured to approach the target differential pressure across the Dth valve and the target differential pressure across the EGR valve, and thus the deterioration of the control responsiveness can be suppressed before and after the feedback control function switching and the deterioration of the fuel efficiency can be minimized.

[Specific Processing of Embodiment 2]

Hereinafter, a specific processing during the fresh air amount control described above will be described in detail with reference to a flowchart. FIG. 15 is a flowchart illustrating a former half of the routine for the fresh air amount control that is executed by the ECU 50 according to Embodiment 2 of the invention. FIG. 16 is a flowchart illustrating a latter half of the routine for the fresh air amount control that is executed by the ECU 50 according to Embodiment 3 of the invention.

In Steps S31 to S34 of the routine that is illustrated in FIG. 15, a processing similar to the processing in Steps S1 to S4 illustrated in FIG. 8 is executed. In Step S35, the intake pressure is detected from the signal of the intake pressure sensor 62. The processing of the above-described steps is a processing for obtaining data required for a processing in steps to be described later. Accordingly, the order of these steps can be appropriately changed.

In the subsequent Step S36, the differential pressure across the EGR valve is calculated from the intake pressure detected in Step S35 and the gas pressure in front of the EGR valve detected in Step S34. In the subsequent Step S37, the differential pressure across the Dth valve is calculated from the intake pressure detected in Step S35 and the gas pressure in front of the Dth valve detected in Step S33.

In the subsequent Step S38, a processing for calculating the target differential pressure across the Dth valve is performed. Specifically, a processing similar to the processing in Step S5 that is illustrated in FIG. 8 is executed in Step S38. In the subsequent Step S39, a processing for calculating the target differential pressure across the EGR valve is performed. Specifically, a processing similar to the processing in Step S6 that is illustrated in FIG. 8 is executed in Step S39.

The processing proceeds to Step S40 that is illustrated in FIG. 16 after the processing of Step S39 that is illustrated in FIG. 15. In Step S40, it is determined whether or not the engine has just been started. Specifically, a processing similar to the processing in Step S9 that is illustrated in FIG. 9 is executed in Step S40. The processing proceeds to Step S42 (described later) in a case where it is determined that the engine has just been started as a result of the determination.

In a case where it is determined in Step S40 that the engine has not just been started, in contrast, the processing proceeds to the subsequent Step S41 and the presence or absence of the case where the fresh air amount is controlled with the EGR valve is determined. More specifically, a processing similar to the processing in Step S10 that is illustrated in FIG. 9 is executed. In a case where it is determined that the case where the fresh air amount is controlled with the EGR valve is absent as a result of the determination, the processing proceeds to Step S45 (described later).

In a case where it is determined in Step S41 that the case where the fresh air amount is controlled with the EGR valve is present, the processing proceeds to the subsequent Step S42. In Step S42, the EGR valve fresh air amount control and the Dth valve differential pressure control are executed in tandem with each other. During the EGR valve fresh air amount control, the EGR valve opening degree is determined by the feedback control such that the actual fresh air amount detected in Step S32 approaches the target fresh air amount calculated in Step S31. In addition, during the Dth valve differential pressure control, the Dth valve closing degree is determined by the feedback control such that the differential pressure across the Dth valve calculated in Step S37 approaches the target differential pressure across the Dth valve calculated in Step S38.

In the subsequent Step S43, it is determined whether or not the differential pressure across the EGR valve falls below the target differential pressure across the EGR valve calculated in Step S39 as a result of the execution of the EGR valve fresh air amount control as the fresh air amount feedback control. In a case where the differential pressure across the EGR valve does not fall below the target differential pressure across the EGR valve as a result of the execution, it is determined that the EGR valve fresh air amount control should be continuously executed, and this routine is temporarily terminated. Then, the routine that is illustrated in FIGS. 15 and 16 is executed again from the beginning.

In a case where it is determined in Step S43 that the differential pressure across the EGR valve falls below the target differential pressure across the EGR valve, the processing proceeds to the subsequent Step S44 and the feedback control function during the fresh air amount control is switched from the EGR valve fresh air amount control to the Dth valve fresh air amount control.

In the subsequent Step S45, the Dth valve fresh air amount control and the EGR valve differential pressure control are executed in tandem with each other. During the Dth valve fresh air amount control, the Dth valve closing degree is determined by the feedback control such that the actual fresh air amount detected in Step S32 approaches the target fresh air amount calculated in Step S31. In addition, during the EGR valve differential pressure control, the EGR valve opening degree is determined by the feedback control such that the differential pressure across the EGR valve calculated in Step S36 approaches the target differential pressure across the EGR valve calculated in Step S39.

Then, in Step S46, it is determined whether or not the differential pressure across the Dth valve falls below the target differential pressure across the Dth valve calculated in Step S38 as a result of the execution of the Dth valve fresh air amount control as the fresh air amount feedback control. In a case where the differential pressure across the Dth valve does not fall below the target differential pressure across the Dth valve as a result of the execution, it is determined that the Dth valve fresh air amount control should be continuously executed, and this routine is temporarily terminated. Then, the routine that is illustrated in FIGS. 15 and 16 is executed again from the beginning.

In a case where it is determined in Step S46 that the differential pressure across the Dth valve falls below the target differential pressure across the Dth valve, the processing proceeds to the subsequent Step S47 and the feedback control function during the fresh air amount control is switched from the Dth valve fresh air amount control to the EGR valve fresh air amount control.

By the fresh air amount control being performed in accordance with the routine described above, the differential pressures across the Dth valve 24 and the EGR valve 32 during the feedback control function switching can be controlled at the respective minimum differential pressures. Accordingly, the deterioration of the fuel efficiency can be effectively suppressed while the control responsiveness and the converging performance are ensured during the fresh air amount control.

The invention is not limited to the embodiments described above, and can be put into practice in the forms of various modifications not departing from the scope of the invention as defined by the appended claims. For example, the invention may be put into practice after being modified as follows.

Embodiment 2 described above is configured to calculate the differential pressure across the Dth valve by using the gas pressure in front of the Dth valve that is detected by the pressure sensor 58 and the intake pressure that is detected by the intake pressure sensor 62. However, the configuration for calculating the differential pressure across the Dth valve is not limited thereto, and a sensor detecting a differential gas pressure across the Dth valve, which detects the differential gas pressure across the Dth valve, may take the place of these sensors. According to this configuration, the differential pressure across the Dth valve can be directly detected by the use of the sensor detecting the differential gas pressure across the Dth valve. Likewise, a sensor detecting a differential gas pressure across the EGR valve, which detects the differential gas pressure across the EGR valve, may take the place of the pressure sensor 64 that detects the gas pressure in front of the EGR valve and the intake pressure sensor 62 with regard to the differential pressure across the EGR valve. According to this configuration, the differential pressure across the EGR valve can be directly detected by the use of the sensor detecting the differential gas pressure across the EGR valve.

In Embodiment 2 described above, the gas pressure in front of the Dth valve and the intake pressure are directly calculated from the respective signals of the sensors. However, these values may be estimated by the use of a known technique as well.

In Embodiment 2 described above, the target differential pressure across the Dth valve is calculated in accordance with the relationship that is illustrated in FIG. 4. However, the method for calculating the target differential pressure across the Dth valve is not limited thereto, and another map may be used insofar as the minimum differential pressure across the Dth valve can be ensured during the switching or the target differential pressure across the Dth valve may be fixed at the value of the minimum differential pressure across the Dth valve regardless of the EGR valve actual opening degree. This also applies to the calculation of the target differential pressure across the EGR valve.

During the fresh air amount control according to Embodiment 2 described above, the Dth valve fresh air amount control and the Dth valve differential pressure control are executed as the control that uses the Dth valve 24 and the EGR valve fresh air amount control and the EGR valve differential pressure control are executed as the control that uses the EGR valve 32. However, during the fresh air amount control according to this embodiment, any one of the control that uses the Dth valve 24 and the control that uses the EGR valve 32 may be substituted with the control according to Embodiment 1 or the example described above.

In Embodiment 2 described above, the Dth valve 24 corresponds to the "throttle valve" according to the invention, the Dth valve fresh air amount control corresponds to the "throttle valve fresh air amount control" according to the invention, the EGR valve fresh air amount control corresponds to the "EGR valve fresh air amount control" according to the invention, the Dth valve differential pressure control corresponds to the "throttle valve differential pressure control" according to the invention, the EGR valve differential pressure control corresponds to the "EGR valve differential pressure control" according to the invention, the differential pressure across the Dth valve corresponds to the "first differential pressure" according to the invention, the target differential pressure across the Dth valve corresponds to the "throttle valve target differential pressure" according to the invention, the differential pressure across the EGR valve corresponds to the "second differential pressure" according to the invention, and the target differential pressure across the EGR valve corresponds to the "EGR valve target differential pressure" according to the invention. In addition, in Embodiment 2 described above, the "switching control means" according to the invention is realized by the ECU 50 executing the processing of Steps S43 and S44 or the processing of Steps S46 and S47 described above and the "differential pressure control means" according to the invention is realized by the ECU 50 executing the processing of Step S42 or S45 described above.

In Embodiment 2 described above, the "differential pressure control means" according to the invention is realized by the ECU 50 executing the processing of Step S42 described above.

Moreover, in Embodiment 2 described above, the "differential pressure control means" according to the invention is realized by the ECU 50 executing the processing of Step S45 described above.

Furthermore, in Embodiment 2 described above, the "EGR valve target differential pressure calculation means" according to the third aspect of the invention is realized by the ECU 50 executing the processing of Step S38 described above.

## Claims

1. A control device for an internal combustion engine, the internal combustion engine including a throttle valve (24) placed in an intake passage (10), an EGR passage (30) recirculating exhaust gas to a downstream side of the throttle valve (24) in the intake passage (10), and an EGR valve (32) placed in the EGR passage (30) wherein:

   the control device is configured to execute a throttle valve fresh air amount control for determining a closing degree of the throttle valve (24) by a feedback control so as to cause a fresh air amount or a state quantity correlated with the fresh air amount to approach a target value and an EGR valve fresh air amount control for determining an opening degree of the EGR valve (32) by a feedback control so as to cause the fresh air amount or the state quantity correlated with the fresh air amount to approach a target value, the control device comprising:

   differential pressure control means (50) for executing a throttle valve differential pressure control and an EGR valve differential pressure control,

   the throttle valve differential pressure control controlling the throttle valve (24) to cause a first differential pressure, which is a difference between a gas pressure on an upstream side of the throttle valve (24) and a gas pressure on the downstream side of the throttle valve (24) in the intake passage (10), to correspond, during the execution of the EGR valve fresh air amount control, to a throttle valve target differential pressure, the throttle valve target differential pressure being a throttle valve minimum differential pressure, at which control responsiveness can be ensured during the execution of the throttle valve fresh air amount control, and the EGR valve differential pressure control controlling the EGR valve (32) to cause a second differential pressure, which is a difference between a gas pressure on an upstream side of the EGR valve (32) and a gas pressure on a downstream side of the EGR valve in the EGR passage, to correspond, during the execution of the throttle valve fresh air amount control to an EGR valve target differential pressure, the EGR valve target differential pressure being an EGR valve minimum differential pressure, at which the control responsiveness can be ensured during the execution of the EGR valve fresh air amount control; and

   switching control means (50) for switching to the EGR valve fresh air amount control in a case where the first differential pressure falls below the throttle valve target differential pressure during the execution of the throttle valve fresh air amount control and for switching to the throttle valve fresh air amount control in a case where the second differential pressure falls below the EGR valve target differential pressure during the execution of the EGR valve fresh air amount control; wherein at least one of:

   the differential pressure control means includes closing degree calculation means for calculating a closing degree for the throttle valve differential pressure control, which is a closing degree of the throttle valve for the first differential pressure to correspond to the throttle valve target differential pressure, and is configured to control the closing degree of the throttle valve at the closing degree for the throttle valve differential pressure control during the throttle valve differential pressure control,

the switching control means is configured to switch to the EGR valve fresh air amount control in a case where the closing degree of the throttle valve falls below the closing degree for the throttle valve differential pressure control during the execution of the throttle valve fresh air amount control,

the closing degree calculation means is configured to calculate the closing degree for the throttle valve differential pressure control by using an actual fresh air amount of the internal combustion engine, gas state quantities across the throttle valve, the throttle valve target differential pressure, and measured pressure and temperature on the upstream side of the throttle valve (24); and:

the differential pressure control means includes opening degree calculation means for calculating an opening degree for the EGR valve differential pressure control, which is an opening degree of the EGR valve for the second differential pressure to correspond to the EGR valve target differential pressure, and is configured to control the opening degree of the EGR valve at the opening degree for the EGR valve differential pressure control during the EGR valve differential pressure control,

the switching control means is configured to switch to the throttle valve fresh air amount control in a case where the opening degree of the EGR valve exceeds the opening degree for the EGR valve differential pressure control during the execution of the EGR valve fresh air amount control,

the opening degree calculation means is configured to calculate the opening degree for the EGR valve differential pressure control by using an actual EGR gas amount of the internal combustion engine, gas state quantities across the EGR valve, the EGR valve target differential pressure, and measured pressure and temperature on the upstream side of the EGR valve (32).

2. A control device for an internal combustion engine, the internal combustion engine including a throttle valve (24) placed in an intake passage (10), an EGR passage (30) recirculating exhaust gas to a downstream side of the throttle valve (24) in the intake passage (10), and an EGR valve (32) placed in the EGR passage (30) wherein: the control device is configured to execute a throttle valve fresh air amount control for determining a closing degree of the throttle valve (24) by a feedback control so as to cause a fresh air amount or a state quantity correlated with the fresh air amount to approach a target value and an EGR valve fresh air amount control for determining an opening degree of the EGR valve (32) by a feedback control so as to cause the fresh air amount or the state quantity correlated with the fresh air amount to approach a target value, the control device comprising:

differential pressure control means (50) for executing a throttle valve differential pressure control and an EGR valve differential pressure control,

the throttle valve differential pressure control controlling the throttle valve (24) to cause a first differential pressure, which is a difference between a gas pressure on an upstream side of the throttle valve (24) and a gas pressure on the downstream side of the throttle valve (24) in the intake passage (10), to correspond, during the execution of the EGR valve fresh air amount control, to a throttle valve target differential pressure, the throttle valve target differential pressure being a throttle valve minimum differential pressure, at which control responsiveness can be ensured during the execution of the throttle valve fresh air amount control, and

the EGR valve differential pressure control controlling the EGR valve (32) to cause a second differential pressure, which is a difference between a gas pressure on an upstream side of the EGR valve (32) and a gas pressure on a downstream side of the EGR valve in the EGR passage, to correspond, during the execution of the throttle valve fresh air amount control to an EGR valve target differential pressure, the EGR valve target differential pressure being an EGR valve pressure minimum differential pressure, at which the control responsiveness can be ensured during the execution of the EGR valve fresh air amount control; and

switching control means (50) for switching to the EGR valve fresh air amount control in a case where the first differential pressure falls below the throttle valve target differential pressure during the execution of the throttle valve fresh air amount control and for switching to the throttle valve fresh air amount control in a case where the second differential pressure falls below the EGR valve target differential pressure during the execution of the EGR valve fresh air amount control; wherein:

the differential pressure control means is configured at least one of:

to acquire an actual value of the first differential pressure and determine the closing degree of the throttle valve by the feedback control so as to cause the actual value to approach the throttle valve target differential pressure during the throttle valve differential pressure control; and

to acquire an actual value of the second differential pressure and determine the opening degree of the EGR valve by the feedback control so as to cause the actual value to approach the EGR valve target differential pressure during the EGR valve differential pressure control.

3. The control device for an internal combustion engine according to claim 1 or 2, further comprising:
EGR valve target differential pressure calculation means (50) for calculating the EGR valve target differential pressure in accordance with the closing degree of the throttle valve.

**Patentansprüche**

1. Steuervorrichtung für einen Verbrennungsmotor, wobei der Verbrennungsmotor ein Drosselventil (24), das in einem Einlasskanal (10) platziert ist, einen AGR-Kanal (30), der Abgas zu einer stromabwärtigen Seite des Drosselventils (24) in dem Einlasskanal (10) rückführt, und ein AGR-Ventil (32), das in dem AGR-Kanal (30) platziert ist, beinhaltet, wobei:
die Steuervorrichtung konfiguriert ist, Folgendes auszuführen: eine Drosselventil-Frischluftmengensteuerung zum Bestimmen eines Schließgrads des Drosselventils (24) durch eine Rückkopplungssteuerung, um zu bewirken, dass sich eine Frischluftmenge oder eine Zustandsgröße, die mit der Frischluftmenge korreliert ist, einem Sollwert annähert, und eine AGR-Ventil-Frischluftmengensteuerung zum Bestimmen eines Öffnungsgrads des AGR-Ventils (32) durch eine Rückkopplungssteuerung, um zu bewirken, dass sich die Frischluftmenge oder die Zustandsgröße, die mit der Frischluftmenge korreliert ist, einem Sollwert annähert, wobei die Steuervorrichtung Folgendes umfasst:

ein Differenzdrucksteuermittel (50) zum Ausführen einer Drosselventil-Differenzdrucksteuerung und einer AGR-Ventil-Differenzdrucksteuerung,
wobei die Drosselventil-Differenzdrucksteuerung das Drosselventil (24) steuert, um zu bewirken, dass ein erster Differenzdruck, der eine Differenz zwischen einem Gasdruck auf einer stromaufwärtigen Seite des Drosselventils (24) und einem Gasdruck auf der stromabwärtigen Seite des Drosselventils (24) in dem Einlasskanal (10) ist, während der Ausführung der AGR-Ventil-Frischluftmengensteuerung einem Drosselventil-Solldifferenzdruck entspricht, wobei der Drosselventil-Solldifferenzdruck ein Drosselventil-Mindestdifferenzdruck ist, bei dem die Steuerungsreaktionsfähigkeit während der Ausführung der Drosselventil-Frischluftmengensteuerung gewährleistet werden kann, und
wobei die AGR-Ventil-Differenzdrucksteuerung das AGR-Ventil (32) steuert, um zu bewirken, dass ein zweiter Differenzdruck, der eine Differenz zwischen einem Gasdruck auf einer stromaufwärtigen Seite des AGR-Ventils (32) und einem Gasdruck auf einer stromabwärtigen Seite des AGR-Ventils in dem AGR-Kanal ist, während der Ausführung der Drosselventil-Frischluftmengensteuerung einem AGR-Ventil-Solldifferenzdruck entspricht, wobei der AGR-Ventil-Solldifferenzdruck ein AGR-Ventil-Mindestdifferenzdruck ist, bei dem die Steuerungsreaktionsfähigkeit während der Ausführung der AGR-Ventil-Frischluftmengensteuerung gewährleistet werden kann; und
ein Schaltsteuermittel (50) zum Umschalten auf die AGR-Ventil-Frischluftmengensteuerung in einem Fall, in dem der erste Differenzdruck unter den Drosselventil-Solldifferenzdruck während der Ausführung der Drosselventil-Frischluftmengensteuerung fällt, und zum Umschalten auf die Drosselventil-Frischluftmengensteuerung in einem Fall, in dem der zweite Differenzdruck unter den AGR-Ventil-Solldifferenzdruck während der Ausführung der AGR-Ventil-Frischluftmengensteuerung fällt; wobei mindestens eines von Folgendem:

das Differenzdrucksteuermittel beinhaltet ein Schließgradberechnungsmittel zum Berechnen eines Schließgrads für die Drosselventil-Differenzdrucksteuerung, der ein Schließgrad des Drosselventils ist, damit der erste Differenzdruck dem Drosselventil-Solldifferenzdruck entspricht, und ist konfiguriert, den Schließgrad des Drosselventils mit dem Schließgrad für die Drosselventil-Differenzdrucksteuerung während der Drosselventil-Differenzdrucksteuerung zu steuern,
das Schaltsteuermittel ist konfiguriert, auf die AGR-Ventil-Frischluftmengensteuerung in einem Fall umzuschalten, in dem der Schließgrad des Drosselventils unter den Schließgrad für die Drosselventil-Differenzdrucksteuerung während der Ausführung der Drosselventil-Frischluftmengensteuerung fällt,
das Schließgradberechnungsmittel ist konfiguriert, den Schließgrad für die Drosselventil-Differenzdrucksteuerung durch Verwenden einer tatsächlichen Frischluftmenge des Verbrennungsmotors, von Gaszustandsgrößen an dem Drosselventil, des Drosselventil-Solldifferenzdrucks und von gemessenem Druck und gemessener Temperatur auf der stromaufwärtigen Seite des Drosselventils (24) zu berechnen; und:

das Differenzdrucksteuermittel beinhaltet ein Öffnungsgradberechnungsmittel zum Berechnen eines Öffnungsgrads für die AGR-Ventil-Differenzdrucksteuerung, der ein Öffnungsgrad des AGR-Ventils ist, damit der zweite Differenzdruck dem AGR-Ventil-Solldifferenzdruck entspricht, und ist konfiguriert, den Öffnungsgrad des AGR-Ventils mit dem Öffnungsgrad für die AGR-Ventil-Differenzdrucksteuerung während der AGR-Ventil-Differenzdrucksteuerung zu steuern,

das Schaltsteuermittel ist konfiguriert, auf die Drosselventil-Frischluftmengensteuerung in einem Fall umzuschalten, in dem der Öffnungsgrad des AGR-Ventils den Öffnungsgrad für die AGR-Ventil-Differenzdrucksteuerung während der Ausführung der AGR-Ventil-Frischluftmengensteuerung überschreitet,

das Öffnungsgradberechnungsmittel ist konfiguriert, den Öffnungsgrad für die AGR-Ventil-Differenzdrucksteuerung durch Verwenden einer tatsächlichen AGR-Gasmenge des Verbrennungsmotors, von Gaszustandsgrößen an dem AGR-Ventil, des AGR-Ventil-Solldifferenzdrucks und von gemessenem Druck und gemessener Temperatur auf der stromaufwärtigen Seite des AGR-Ventils (32) zu berechnen.

2.  Steuervorrichtung für einen Verbrennungsmotor, wobei der Verbrennungsmotor ein Drosselventil (24), das in einem Einlasskanal (10) platziert ist, einen AGR-Kanal (30), der Abgas zu einer stromabwärtigen Seite des Drosselventils (24) in dem Einlasskanal (10) rückführt, und ein AGR-Ventil (32), das in dem AGR-Kanal (30) platziert ist, beinhaltet, wobei:

    die Steuervorrichtung konfiguriert ist, Folgendes auszuführen: eine Drosselventil-Frischluftmengensteuerung zum Bestimmen eines Schließgrads des Drosselventils (24) durch eine Rückkopplungssteuerung, um zu bewirken, dass sich eine Frischluftmenge oder eine Zustandsgröße, die mit der Frischluftmenge korreliert ist, einem Sollwert annähert, und eine AGR-Ventil-Frischluftmengensteuerung zum Bestimmen eines Öffnungsgrads des AGR-Ventils (32) durch eine Rückkopplungssteuerung, um zu bewirken, dass sich die Frischluftmenge oder die Zustandsgröße, die mit der Frischluftmenge korreliert ist, einem Sollwert annähert, wobei die Steuervorrichtung Folgendes umfasst:

    ein Differenzdrucksteuermittel (50) zum Ausführen einer Drosselventil-Differenzdrucksteuerung und einer AGR-Ventil-Differenzdrucksteuerung,

    wobei die Drosselventil-Differenzdrucksteuerung das Drosselventil (24) steuert, um zu bewirken, dass ein erster Differenzdruck, der eine Differenz zwischen einem Gasdruck auf einer stromaufwärtigen Seite des Drosselventils (24) und einem Gasdruck auf der stromabwärtigen Seite des Drosselventils (24) in dem Einlasskanal (10) ist, während der Ausführung der AGR-Ventil-Frischluftmengensteuerung einem Drosselventil-Solldifferenzdruck entspricht, wobei der Drosselventil-Solldifferenzdruck ein Drosselventil-Mindestdifferenzdruck ist, bei dem die Steuerungsreaktionsfähigkeit während der Ausführung der Drosselventil-Frischluftmengensteuerung gewährleistet werden kann, und

    wobei die AGR-Ventil-Differenzdrucksteuerung das AGR-Ventil (32) steuert, um zu bewirken, dass ein zweiter Differenzdruck, der eine Differenz zwischen einem Gasdruck auf einer stromaufwärtigen Seite des AGR-Ventils (32) und einem Gasdruck auf einer stromabwärtigen Seite des AGR-Ventils in dem AGR-Kanal ist, während der Ausführung der Drosselventil-Frischluftmengensteuerung einem AGR-Ventil-Solldifferenzdruck entspricht, wobei der AGR-Ventil-Solldifferenzdruck ein AGR-Ventil-Mindestdifferenzdruck ist, bei dem die Steuerungsreaktionsfähigkeit während der Ausführung der AGR-Ventil-Frischluftmengensteuerung gewährleistet werden kann; und

    ein Schaltsteuermittel (50) zum Umschalten auf die AGR-Ventil-Frischluftmengensteuerung in einem Fall, in dem der erste Differenzdruck unter den Drosselventil-Solldifferenzdruck während der Ausführung der Drosselventil-Frischluftmengensteuerung fällt, und zum Umschalten auf die Drosselventil-Frischluftmengensteuerung in einem Fall, in dem der zweite Differenzdruck unter den AGR-Ventil-Solldifferenzdruck während der Ausführung der AGR-Ventil-Frischluftmengensteuerung fällt; wobei:

    das Differenzdrucksteuermittel zu mindestens einem von Folgendem konfiguriert ist:

    Erfassen eines Ist-Werts des ersten Differenzdrucks und Bestimmen des Schließgrads des Drosselventils durch die Rückkopplungssteuerung, um zu bewirken, dass sich der Ist-Wert dem Drosselventil-Solldifferenzdruck während der Drosselventil-Differenzdrucksteuerung annähert; und

    Erfassen eines tatsächlichen Werts des zweiten Differenzdrucks und Bestimmen des Öffnungsgrads des AGR-Ventils durch die Rückkopplungssteuerung, um zu bewirken, dass sich der tatsächliche Wert dem AGR-Ventil-Solldifferenzdruck während der AGR-Ventil-Differenzdrucksteuerung annähert.

3.  Steuervorrichtung für einen Verbrennungsmotor nach Anspruch 1 oder 2, ferner umfassend:
    ein AGR-Ventil-Solldifferenzdruck-Berechnungsmittel (50) zum Berechnen des AGR-Ventil-Solldifferenzdrucks in Übereinstimmung mit dem Schließgrad des Drosselventils.

**Revendications**

1. Dispositif de contrôle pour un moteur à combustion interne, le moteur à combustion interne comprenant une soupape d'étranglement (24) placée dans un passage d'admission (10), un passage EGR (30) remettant en circulation les gaz d'échappement vers un côté aval de la soupape d'étranglement (24) dans le passage d'admission (10), et une soupape EGR (32) placée dans le passage EGR (30),

le dispositif de contrôle étant conçu pour effectuer un contrôle de la quantité d'air frais de la soupape d'étranglement destiné à déterminer un degré de fermeture de la soupape d'étranglement (24) par une commande de rétroaction de manière à amener une quantité d'air frais ou une quantité d'état corrélée avec la quantité d'air frais à se rapprocher d'une valeur cible et un contrôle de la quantité d'air frais de la soupape EGR de manière à déterminer un degré d'ouverture de la soupape EGR (32) par une commande de rétroaction de manière à amener la quantité d'air frais ou la quantité d'état corrélée avec la quantité d'air frais à se rapprocher d'une valeur cible, le dispositif de contrôle comprenant :

un moyen de contrôle de pression différentielle (50) destiné à effectuer un contrôle de la pression différentielle de la soupape d'étranglement et un contrôle de la pression différentielle de la soupape EGR,

le contrôle de la pression différentielle de la soupape d'étranglement contrôlant la soupape d'étranglement (24) pour amener une première pression différentielle, qui est une différence entre une pression de gaz sur un côté amont de la soupape d'étranglement (24) et une pression de gaz sur le côté aval de la soupape d'étranglement (24) dans le passage d'admission (10), à correspondre, pendant la réalisation du contrôle de la quantité d'air frais de la soupape EGR, à une pression différentielle cible de la soupape d'étranglement, la pression différentielle cible de la soupape d'étranglement étant une pression différentielle minimale de la soupape d'étranglement, au niveau de laquelle la réactivité de contrôle peut être assurée pendant la réalisation du contrôle de la quantité d'air frais de la soupape d'étranglement, et

le contrôle de la pression différentielle de la soupape EGR contrôlant la soupape EGR (32) pour amener une deuxième pression différentielle, qui est une différence entre une pression de gaz sur un côté amont de la soupape EGR (32) et une pression de gaz sur un côté aval de la soupape EGR dans le passage EGR, à correspondre, pendant la réalisation du contrôle de la quantité d'air frais de la soupape d'étranglement, à une pression différentielle cible de soupape EGR, la pression différentielle cible de soupape EGR étant une pression différentielle minimale de soupape EGR, au niveau de laquelle la réactivité de contrôle peut être assurée pendant la réalisation du contrôle de la quantité d'air frais de soupape EGR ; et

un moyen de commande de commutation (50) destiné à commuter vers le contrôle de la quantité d'air frais de soupape EGR au cas où la première pression différentielle se situe au-dessous de la pression différentielle cible de soupape d'étranglement pendant la réalisation du contrôle de la quantité d'air frais de soupape d'étranglement et à commuter vers le contrôle de la quantité d'air frais de soupape d'étranglement au cas où la deuxième pression différentielle se situe au-dessous de la pression différentielle cible de soupape EGR pendant la réalisation du contrôle de la quantité d'air frais de soupape EGR ;

le moyen de contrôle de pression différentielle comprenant un moyen de calcul de degré de fermeture permettant de calculer un degré de fermeture pour le contrôle de la pression différentielle de soupape d'étranglement, qui est un degré de fermeture de la soupape d'étranglement pour la première pression différentielle pour correspondre à la pression différentielle cible de soupape d'étranglement, et étant conçu pour contrôler le degré de fermeture de la soupape d'étranglement au niveau du degré de fermeture pour le contrôle de la pression différentielle de la soupape d'étranglement pendant le contrôle de la pression différentielle de la soupape d'étranglement,

le moyen de commande de commutation étant conçu pour commuter vers le contrôle de la quantité d'air frais de soupape EGR au cas où le degré de fermeture de la soupape d'étranglement se situe au-dessous du degré de fermeture pour le contrôle de la pression différentielle de la soupape d'étranglement pendant la réalisation du contrôle de la quantité d'air frais de la soupape d'étranglement,

le moyen de calcul de degré de fermeture étant conçu pour calculer le degré de fermeture pour le contrôle de la pression différentielle de la soupape d'étranglement à l'aide d'une quantité réelle d'air frais du moteur à combustion interne, de quantités d'état de gaz sur la soupape d'étranglement, la pression différentielle cible de la soupape d'étranglement, et une pression et une température mesurées sur le côté amont de la soupape d'étranglement (24) ; et/ou :

le moyen de contrôle de la pression différentielle comprenant un moyen de calcul de degré d'ouverture permettant de calculer un degré d'ouverture pour le contrôle de la pression différentielle de la soupape EGR, qui est un degré d'ouverture de la soupape EGR pour la deuxième pression différentielle pour correspondre à la pression différentielle cible de la soupape EGR, et étant conçu pour contrôler le degré d'ouverture de la soupape EGR au niveau du degré d'ouverture pour le contrôle de la pression différentielle de la soupape EGR pendant le contrôle de la pression différentielle de la soupape EGR,

le moyen de commande de commutation étant conçu pour commuter vers le contrôle de la quantité d'air frais de soupape d'étranglement au cas où le degré d'ouverture de la soupape EGR dépasse le degré d'ouverture pour le contrôle de la pression différentielle de la soupape EGR pendant la réalisation du contrôle de la quantité d'air frais de la soupape EGR,

le moyen de calcul de degré d'ouverture étant conçu pour calculer le degré d'ouverture pour le contrôle de la pression différentielle de la soupape EGR à l'aide d'une quantité réelle de gaz EGR du moteur à combustion interne, de quantités d'état de gaz sur la soupape EGR, la pression différentielle cible de soupape EGR, et une pression et une température mesurées sur le côté amont de la soupape EGR (32).

2. Dispositif de contrôle pour un moteur à combustion interne, le moteur à combustion interne comprenant une soupape d'étranglement (24) placée dans un passage d'admission (10), un passage EGR (30) remettant en circulation les gaz d'échappement vers un côté aval de la soupape d'étranglement (24) dans le passage d'admission (10), et une soupape EGR (32) placée dans le passage EGR (30),

le dispositif de contrôle étant conçu pour effectuer un contrôle de la quantité d'air frais de la soupape d'étranglement destiné à déterminer un degré de fermeture de la soupape d'étranglement (24) par une commande de rétroaction de manière à amener une quantité d'air frais ou une quantité d'état corrélée avec la quantité d'air frais à se rapprocher d'une valeur cible et un contrôle de la quantité d'air frais de la soupape EGR destiné à déterminer un degré d'ouverture de la soupape EGR (32) par une commande de rétroaction de manière à amener la quantité d'air frais ou la quantité d'état corrélée avec la quantité d'air frais à se rapprocher d'une valeur cible, le dispositif de contrôle comprenant :

un moyen de contrôle de pression différentielle (50) destiné à effectuer un contrôle de la pression différentielle de la soupape d'étranglement et un contrôle de la pression différentielle de la soupape EGR,

le contrôle de la pression différentielle de la soupape d'étranglement contrôlant la soupape d'étranglement (24) pour amener une première pression différentielle, qui est une différence entre une pression de gaz sur un côté amont de la soupape d'étranglement (24) et une pression de gaz sur le côté aval de la soupape d'étranglement (24) dans le passage d'admission (10), à correspondre, pendant la réalisation du contrôle de la quantité d'air frais de la soupape EGR, à une pression différentielle cible de la soupape d'étranglement, la pression différentielle cible de la soupape d'étranglement étant une pression différentielle minimale de la soupape d'étranglement, au niveau de laquelle la réactivité de contrôle peut être assurée pendant la réalisation du contrôle de la quantité d'air frais de la soupape d'étranglement, et

le contrôle de la pression différentielle de la soupape EGR contrôlant la soupape EGR (32) pour amener une deuxième pression différentielle, qui est une différence entre une pression de gaz sur un côté amont de la soupape EGR (32) et une pression de gaz sur un côté aval de la soupape EGR dans le passage EGR, à correspondre, pendant la réalisation du contrôle de la quantité d'air frais de la soupape d'étranglement, à une pression différentielle cible de la soupape EGR, la pression différentielle cible de la soupape EGR étant une pression différentielle minimale de pression de la soupape EGR, au niveau de laquelle la réactivité de contrôle peut être assurée pendant la réalisation du contrôle de la quantité d'air frais de la soupape EGR ; et

un moyen de commande de commutation (50) destiné à commuter vers le contrôle de la quantité d'air frais de soupape EGR au cas où la première pression différentielle se situe au-dessous de la pression différentielle cible de la soupape d'étranglement pendant la réalisation du contrôle de la quantité d'air frais de la soupape d'étranglement et à commuter vers le contrôle de la quantité d'air frais de la soupape d'étranglement au cas où la deuxième pression différentielle se situe au-dessous de la pression différentielle cible de la soupape EGR pendant la réalisation du contrôle de la quantité d'air frais de la soupape EGR ;

le moyen de contrôle de la pression différentielle étant conçu :

pour acquérir une valeur réelle de la première pression différentielle et déterminer le degré de fermeture de la soupape d'étranglement par la commande de rétroaction de manière à amener la valeur réelle à se rapprocher de la pression différentielle cible de la soupape d'étranglement pendant le contrôle de la pression différentielle de la soupape d'étranglement ; et/ou

pour acquérir une valeur réelle de la deuxième pression différentielle et déterminer le degré d'ouverture de la soupape EGR par la commande de rétroaction de manière à amener la valeur réelle à se rapprocher de la pression différentielle cible de la soupape EGR pendant le contrôle de la pression différentielle de la soupape EGR.

3. Dispositif de contrôle pour un moteur à combustion interne selon la revendication 1 ou 2, comprenant en outre :
un moyen de calcul de pression différentielle cible de soupape EGR (50) destiné à calculer la pression différentielle cible de la soupape EGR conformément au degré de fermeture de la soupape d'étranglement.

FIG. 1

EP 3 075 991 B1

# FIG. 2

*FIG. 3*

# FIG. 4

TARGET DIFFERENTIAL PRESSURE ACROSS Dth VALVE

HIGH

LOW

CLOSED      OPENING DEGREE $\alpha$      OPEN

EGR VALVE ACTUAL OPENING DEGREE

MINIMUM DIFFERENTIAL PRESSURE ACROSS Dth VALVE AT WHICH CONTROLLABILITY CAN BE ENSURED

EP 3 075 991 B1

# FIG. 5

MINIMUM DIFFERENTIAL PRESSURE ACROSS EGR VALVE AT WHICH CONTROLLABILITY CAN BE ENSURED

TARGET DIFFERENTIAL PRESSURE ACROSS EGR VALVE

HIGH

LOW

CLOSED

CLOSING DEGREE β

OPEN

Dth VALVE ACTUAL CLOSING DEGREE

# FIG. 6

EP 3 075 991 B1

# FIG. 7

Dth VALVE ACTUAL
CLOSING DEGREE →

PRESSURE IN FRONT
OF EGR VALVE pegr →

ACTUAL EGR GAS AMOUNT gegr →

GAS TEMPERATURE IN FRONT OF EGR VALVE thegr →

**511** CALCULATE TARGET DIFFERENTIAL PRESSURE ACROSS EGR VALVE

pimtrg

**512** CALCULATE EFFECTIVE OPENING AREA

aegr

**513** CALCULATE EGR VALVE OPENING DEGREE

→ MAXIMUM EGR VALVE OPENING DEGREE B

# FIG. 8

```
         ( START )
            │
            ▼
```

CALCULATE TARGET FRESH AIR AMOUNT — S1

```
            │
            ▼
```

DETECT ACTUAL FRESH AIR AMOUNT — S2

```
            │
            ▼
```

DETECT GAS PRESSURE IN FRONT OF Dth VALVE — S3

```
            │
            ▼
```

DETECT GAS PRESSURE IN FRONT OF EGR VALVE — S4

```
            │
            ▼
```

CALCULATE TARGET DIFFERENTIAL PRESSURE ACROSS Dth VALVE FROM EGR VALVE ACTUAL OPENING DEGREE (MAP) — S5

```
            │
            ▼
```

CALCULATE TARGET DIFFERENTIAL PRESSURE ACROSS EGR VALVE FROM Dth VALVE ACTUAL OPENING DEGREE (MAP) — S6

```
            │
            ▼
```

CALCULATE MINIMUM Dth VALVE CLOSING DEGREE A BY USING NOZZLE FORMULA FROM TARGET DIFFERENTIAL PRESSURE ACROSS Dth VALVE, GAS PRESSURE IN FRONT OF Dth VALVE, ACTUAL FRESH AIR AMOUNT, AND GAS TEMPERATURE IN FRONT OF Dth VALVE — S7

```
            │
            ▼
```

CALCULATE MAXIMUM EGR VALVE OPENING DEGREE B BY USING NOZZLE FORMULA FROM TARGET DIFFERENTIAL PRESSURE ACROSS EGR VALVE, GAS PRESSURE IN FRONT OF EGR VALVE, ACTUAL EGR GAS AMOUNT, AND GAS TEMPERATURE IN FRONT OF EGR VALVE — S8

```
            │
            ▼
          ( A )
```

# FIG.9

(A)

S9

YES ◁——— HAS ENGINE JUST BEEN STARTED?

NO

S10

IS CASE WHERE FRESH
AIR AMOUNT IS CONTROLLED WITH EGR
VALVE PRESENT? ——— NO

YES

S11

SET MINIMUM Dth VALVE CLOSING DEGREE A TO Dth VALVE

S12

NO ◁——— DOES EGR
VALVE ACTUAL OPENING
DEGREE EXCEED MAXIMUM EGR VALVE
OPENING DEGREE B AS RESULT OF CONTROL
OF FRESH AIR AMOUNT WITH
EGR VALVE?

YES

S13

SWITCH FRESH AIR AMOUNT FEEDBACK
CONTROL FUNCTION SUCH THAT FRESH AIR
AMOUNT IS CONTROLLED WITH Dth VALVE

SET MAXIMUM EGR VALVE OPENING DEGREE B TO EGR VALVE

S14

S15

DOES Dth
VALVE ACTUAL CLOSING
DEGREE FALL BELOW MINIMUM Dth VALVE
CLOSING DEGREE A AS RESULT OF CONTROL
OF FRESH AIR AMOUNT WITH
Dth VALVE? ——— NO

YES

S16

SWITCH FRESH AIR AMOUNT FEEDBACK
CONTROL FUNCTION SUCH THAT FRESH AIR
AMOUNT IS CONTROLLED WITH EGR VALVE

END

**F I G . 1 0**

EP 3 075 991 B1

# FIG. 11

ROTATION
SPEED ne

INJECTION
QUANTITY q

MINIMUM Dth
VALVE CLOSING
DEGREE BASE
VALUE MAP — 521

ATMOSPHERIC
PRESSURE pa

LOW PRESSURE
CORRECTION
MAP — 522

WATER
TEMPERATURE thw

LOW WATER
TEMPERATURE
CORRECTION
MAP — 523

ATMOSPHERIC
TEMPERATURE tha

LOW
ATMOSPHERIC
TEMPERATURE
CORRECTION
MAP — 524

MINIMUM Dth VALVE
CLOSING DEGREE A

EP 3 075 991 B1

## FIG. 12

ROTATION SPEED ne

INJECTION QUANTITY q

MAXIMUM EGR VALVE OPENING DEGREE BASE VALUE MAP — 531

MAXIMUM EGR VALVE OPENING DEGREE B

ATMOSPHERIC PRESSURE pa

LOW PRESSURE CORRECTION MAP — 532

WATER TEMPERATURE thw

LOW WATER TEMPERATURE CORRECTION MAP — 533

ATMOSPHERIC TEMPERATURE tha

LOW ATMOSPHERIC TEMPERATURE CORRECTION MAP — 534

EP 3 075 991 B1

# FIG. 13

```
       ( START )
           │
           ▼
┌─────────────────────────────────┐
│ CALCULATE TARGET FRESH AIR AMOUNT│─── S21
└─────────────────────────────────┘
           │
           ▼
┌─────────────────────────────────┐
│ DETECT ACTUAL FRESH AIR AMOUNT   │─── S22
└─────────────────────────────────┘
           │
           ▼
┌───────────────────────────────────────┐
│ CALCULATE MINIMUM Dth VALVE CLOSING    │
│ DEGREE A FROM ROTATION SPEED, INJECTION│─── S23
│ QUANTITY, WATER TEMPERATURE, ATMOSPHERIC│
│ TEMPERATURE, AND ATMOSPHERIC PRESSURE  │
└───────────────────────────────────────┘
           │
           ▼
┌───────────────────────────────────────┐
│ CALCULATE MAXIMUM EGR VALVE OPENING    │
│ DEGREE B FROM ROTATION SPEED, INJECTION│─── S24
│ QUANTITY, WATER TEMPERATURE, ATMOSPHERIC│
│ TEMPERATURE, AND ATMOSPHERIC PRESSURE  │
└───────────────────────────────────────┘
           │
           ▼
         ( A )
```

*FIG.14*

EP 3 075 991 B1

# FIG. 15

```
        ( START )
            │
            ▼
CALCULATE TARGET FRESH AIR AMOUNT  ─S31
            │
            ▼
DETECT ACTUAL FRESH AIR AMOUNT  ─S32
            │
            ▼
DETECT GAS PRESSURE IN FRONT OF Dth VALVE  ─S33
            │
            ▼
DETECT GAS PRESSURE IN FRONT OF EGR VALVE  ─S34
            │
            ▼
DETECT INTAKE PRESSURE  ─S35
            │
            ▼
CALCULATE DIFFERENTIAL PRESSURE ACROSS EGR VALVE  ─S36
            │
            ▼
CALCULATE DIFFERENTIAL PRESSURE ACROSS Dth VALVE  ─S37
            │
            ▼
CALCULATE TARGET DIFFERENTIAL PRESSURE ACROSS Dth
VALVE FROM EGR VALVE ACTUAL OPENING DEGREE (MAP)  ─S38
            │
            ▼
CALCULATE TARGET DIFFERENTIAL PRESSURE ACROSS EGR
VALVE FROM Dth VALVE ACTUAL OPENING DEGREE (MAP)  ─S39
            │
            ▼
          ( B )
```

# *FIG. 16*

(B)

S40

YES ← HAS ENGINE JUST BEEN STARTED?

↓NO

S41

IS CASE WHERE FRESH AIR AMOUNT IS CONTROLLED WITH EGR VALVE PRESENT? → NO

↓YES

S42

CONTROL Dth VALVE SUCH THAT DIFFERENTIAL PRESSURE ACROSS Dth VALVE CORRESPONDS TO TARGET DIFFERENTIAL PRESSURE ACROSS Dth VALVE

S43

NO ← IS CASE WHERE DIFFERENTIAL PRESSURE ACROSS EGR VALVE FALLS BELOW TARGET DIFFERENTIAL PRESSURE ACROSS EGR VALVE PRESENT AS RESULT OF CONTROL OF FRESH AIR AMOUNT WITH EGR VALVE?

YES↓

S44

SWITCH FRESH AIR AMOUNT FEEDBACK CONTROL FUNCTION SUCH THAT FRESH AIR AMOUNT IS CONTROLLED WITH Dth VALVE

CONTROL EGR VALVE SUCH THAT DIFFERENTIAL PRESSURE ACROSS EGR VALVE CORRESPONDS TO TARGET DIFFERENTIAL PRESSURE ACROSS EGR VALVE — S45

S46

IS CASE WHERE DIFFERENTIAL PRESSURE ACROSS Dth VALVE FALLS BELOW TARGET DIFFERENTIAL PRESSURE ACROSS Dth VALVE PRESENT AS RESULT OF CONTROL OF FRESH AIR AMOUNT WITH Dth VALVE? → NO

↓YES

S47

SWITCH FRESH AIR AMOUNT FEEDBACK CONTROL FUNCTION SUCH THAT FRESH AIR AMOUNT IS CONTROLLED WITH EGR VALVE

( END )

**EP 3 075 991 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080167790 A
- US 20120037134 A
- US 20050193978 A
- EP 2128407 A
- US 20030188727 A
- JP 2003166445 A